(19) Europäisches Patentamt / European Patent Office / Office européen des brevets

(11) **EP 4 254 084 A1**

(12) **EUROPEAN PATENT APPLICATION**


(43) Date of publication:
**04.10.2023 Bulletin 2023/40**

(21) Application number: **23162572.4**

(22) Date of filing: **17.03.2023**

(51) International Patent Classification (IPC):
***G05B 13/04*** *(2006.01)*

(52) Cooperative Patent Classification (CPC):
**G05B 13/048; G05B 19/042**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.04.2022 JP 2022061757**



(71) Applicant: **OMRON Corporation**
**Shiokoji-dori, Shimogyo-ku**
**Kyoto-shi**
**Kyoto 600-8530 (JP)**

(72) Inventor: **NAMIE, Masaki**
**Kyoto-shi, Kyoto, 6008530 (JP)**

(74) Representative: **Bardehle Pagenberg Partnerschaft mbB**
**Patentanwälte Rechtsanwälte**
**Prinzregentenplatz 7**
**81675 München (DE)**


(54) **CONTROL SYSTEM, CONTROL DEVICE, CONTROL METHOD, AND CONTROL PROGRAM**


(57) A control system includes a target device (20) configured to be controlled based on a control signal, a sensor (30) configured to measure a physical quantity of the target device (20), and a control device (10) configured to output the control signal to the target device (20) based on the physical quantity and a command value, and perform feedback control. The control device (10) includes a command value generator (11) configured to generate a command value for the target device (20), a command speed arithmetic unit (12) configured to calculate a command speed by model predictive control using a dynamic characteristic model indicating a relationship between the control signal and the physical quantity, the command value, and the physical quantity, and a control signal generator (13) configured to generate the control signal by speed control with dead time compensation using a model of the target device (20), dead time, the command speed, and the physical quantity, and output the control signal to the target device (20).


*FIG. 3*

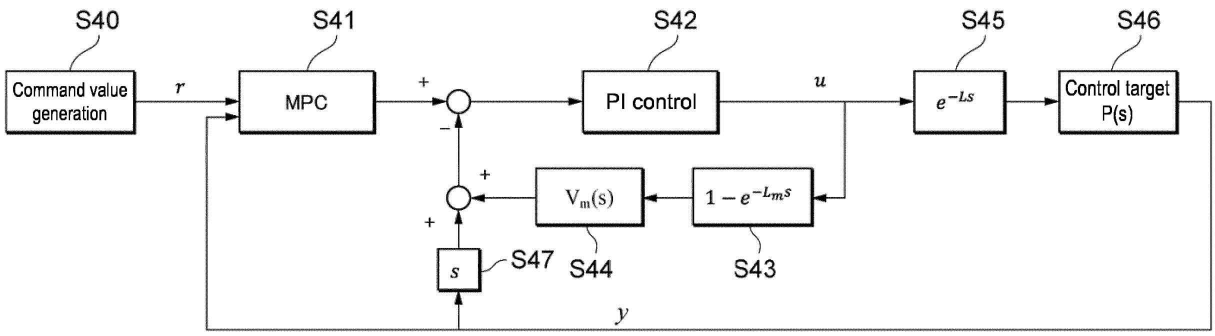


EP 4 254 084 A1

## Description

CROSS-REFERENCE TO RELATED APPLICATION

This application is based on Japanese Patent Application No. 2022-061757 filed with the Japan Patent Office on April 1, 2022, the entire contents of which are incorporated herein by reference.

FIELD

The present invention relates to a control system, a control device, a control method, and a control program.

BACKGROUND

In the technical field of factory automation, feedback control of a target device such as a servomotor is performed on the basis of a value measured by a sensor. Here, in a case where there is a time difference between when an input is given to the target device and when an output corresponding to the input appears, the feedback control loop has dead time. For example, a dead time may occur in a case where the devices are connected by relatively low-speed wired communication or wireless communication or in a case where measurement is performed by a sensor at a tip of a conveyance device such as a belt conveyor.

The dead time is a factor that lowers the stability and controllability of a control system. Therefore, stability and controllability are enhanced by compensating dead time by applying Smith compensation to a control system including dead time.

For example, in Japanese Patent Application Laid-Open No. 2014-81821, a high gain is enabled by applying Smith compensation to a system including a long dead time, and an offset caused by disturbance which is a weak point of the Smith compensation is removed by providing a high-pass filter. Moreover, in order to improve overshoot with respect to a command value caused by the high-pass filter, a low-pass filter is provided, and a highfrequency component is cut from the command value input to the low-pass filter.

However, in the configuration described in Japanese Patent Application Laid-Open No. 2014-81821, since it is necessary to perform adjustment by combining the high-pass filter and the low-pass filter, it is assumed that it is difficult to adjust the high-pass filter and the low-pass filter while obtaining followability to the command value, and there is room for improvement.

SUMMARY

The present invention has been made in view of such circumstances, and an object of the present invention is to provide a control system, a control device, a control method, and a control program capable of improving followability to a command value without requiring difficult adjustment.

A control system according to one aspect of the present invention includes: a target device configured to be controlled based on a control signal; a sensor configured to measure a physical quantity of the target device; and a control device configured to output the control signal to the target device based on the physical quantity and a command value, and perform feedback control. The control device includes: a command value generator configured to generate the command value for the target device; a command speed arithmetic unit configured to calculate a command speed by model predictive control using a dynamic characteristic model indicating a relationship between the control signal and the physical quantity, the command value, and the physical quantity; and a control signal generator configured to generate the control signal by speed control with dead time compensation using a model of the target device, dead time, the command speed, and the physical quantity, and output the control signal to the target device.

According to this aspect, it is possible to generate the command value for the target device, calculate the command speed by the model predictive control using the dynamic characteristic model indicating the relationship between the control signal and the physical quantity, the command value, and the physical quantity, and generate the control signal by the speed control with dead time compensation using the model of the target device, the dead time, the command speed, and the physical quantity, and output the control signal to the target device. This makes it possible to perform control such that the deviation between the command value and the physical quantity is reduced by the model predictive control while compensating for a time delay due to the dead time.

In the above aspect, the speed control with dead time compensation may include PI control or model following type two-degree-of-freedom control.

A control system according to another aspect of the present invention includes: a target device configured to be controlled based on a control signal; a sensor configured to measure a physical quantity of the target device; and a control device configured to output the control signal to the target device based on the physical quantity and a command value, and perform feedback control. The control device includes a first control device and a second control device provided in a same area as the target device and the sensor. The first control device includes: a command value generator configured to generate the command value for the target device; and a command speed arithmetic unit configured to calculate a command speed by model predictive control using a dynamic characteristic model indicating a relationship between the control signal and the physical quantity, the command value, and the physical quantity, and output the command speed to the second control device. The second control device includes a control signal generator configured to generate the control signal by a speed control loop using a model of the target device, the command speed, and the physical quantity, and output the control signal to the target device.

According to this aspect, it is possible to generate the command value for the target device, calculate the command speed by the model predictive control using the dynamic characteristic model indicating the relationship between the control signal and the physical quantity, the command value, and the physical quantity, and generate the control signal by the speed control with dead time compensation using the model of the target device, the dead time, the command speed, and the physical quantity, and output the control signal to the target device. This makes it possible to perform control such that the deviation between the command value and the physical quantity is reduced by the model predictive control while compensating for a time delay due to the dead time.

In the above aspect, the speed control loop may include a model following type two-degree-of-freedom control.

A control device according to another aspect of the present invention is a control device configured to output a control signal to a target device based on a physical quantity of the target device measured by a sensor and a command value to perform feedback control, the control device including: a command value generator configured to generate the command value for the target device controlled based on the control signal; a command speed arithmetic unit configured to calculate a command speed by model predictive control using a dynamic characteristic model indicating a relationship between the control signal and the physical quantity, the command value, and the physical quantity; and a control signal generator configured to generate the control signal by speed control with dead time compensation using a model of the target device, dead time, the command speed, and the physical quantity, and output the control signal to the target device.

According to this aspect, it is possible to generate the command value for the target device, calculate the command speed by the model predictive control using the dynamic characteristic model indicating the relationship between the control signal and the physical quantity, the command value, and the physical quantity, and generate the control signal by the speed control with dead time compensation using the model of the target device, the dead time, the command speed, and the physical quantity, and output the control signal to the target device. This makes it possible to perform control such that the deviation between the command value and the physical quantity is reduced by the model predictive control while compensating for a time delay due to the dead time.

A control method according to another aspect of the present invention is a control method executed by a control device configured to output a control signal to a target device based on a physical quantity of the target device measured by a sensor and a command value to perform feedback control, the control method including: generating the command value for the target device controlled based on the control signal; calculating a command speed by model predictive control using a dynamic characteristic model indicating a relationship between the control signal and the physical quantity, the command value, and the physical quantity; and generating the control signal by speed control with dead time compensation using a model of the target device, dead time, the command speed, and the physical quantity, and outputting the control signal to the target device.

According to this aspect, it is possible to generate the command value for the target device, calculate the command speed by the model predictive control using the dynamic characteristic model indicating the relationship between the control signal and the physical quantity, the command value, and the physical quantity, and generate the control signal by the speed control with dead time compensation using the model of the target device, the dead time, the command speed, and the physical quantity, and output the control signal to the target device. This makes it possible to perform control such that the deviation between the command value and the physical quantity is reduced by the model predictive control while compensating for a time delay due to the dead time.

A control program that causes a control device configured to output a control signal to a target device based on a physical quantity of the target device measured by a sensor and a command value, and perform feedback control to function as: a command value generator configured to generate the command value for the target device controlled based on the control signal; a command speed arithmetic unit configured to calculate a command speed by model predictive control using a dynamic characteristic model indicating a relationship between the control signal and the physical quantity, the command value, and the physical quantity; and a control signal generator configured to generate the control signal by speed control with dead time compensation using a model of the target device, dead time, the command speed, and the physical quantity, and output the control signal to the target device.

According to this aspect, it is possible to generate the command value for the target device, calculate the command speed by the model predictive control using the dynamic characteristic model indicating the relationship between the control signal and the physical quantity, the command value, and the physical quantity, and generate the control signal by the speed control with dead time compensation using the model of the target device, the dead time, the command speed, and the physical quantity, and output the control signal to the target device. This makes it possible to perform control such that the deviation between the command value and the physical quantity is reduced by the model predictive control while compensating for a time delay due to the dead time.

According to the present invention, it is possible to provide a control system, a control device, a control method, and a control program capable of improving followability to a command value without requiring difficult adjustment.

BRIEF DESCRIPTION OF THE DRAWINGS

Fig. 1 is a diagram illustrating a network configuration of a control system according to an embodiment;
Fig. 2 is a diagram illustrating functional blocks of a control device according to the embodiment;
Fig. 3 is a diagram illustrating control blocks of the control system according to the embodiment;
Fig. 4 is a diagram illustrating control blocks of the control system according to the embodiment;
Fig. 5 is a diagram illustrating a physical configuration of the control device according to the embodiment;
Fig. 6 is a flowchart illustrating an example of control processing executed by the control device 10 according to the embodiment;
Fig. 7 is a diagram illustrating control blocks of a control system according to a modified example;
Fig. 8 is a diagram illustrating control blocks of the control system according to the modified example;
Fig. 9 is a diagram illustrating a transition of a command position that is a command value at the time of simulation;
Fig. 10A is a diagram illustrating a position of a target device controlled by the control device according to the embodiment in a first simulation;
Fig. 10B is a diagram illustrating an error between a position controlled by the control device according to the embodiment and a command value in the first simulation;
Fig. 10C is a diagram illustrating a thrust controlled by the control device according to the embodiment in the first simulation;
Fig. 11A is a diagram illustrating a position of a target device controlled by a control device according to a first comparative example in the first simulation;
Fig. 11B is a diagram illustrating an error between a position controlled by the control device according to the first comparative example and a command value in the first simulation;
Fig. 11C is a diagram illustrating a thrust controlled by the control device according to the first comparative example in the first simulation;
Fig. 12A is a diagram illustrating a position of a target device controlled by a control device according to a second comparative example in the first simulation;
Fig. 12B is a diagram illustrating an error between a position controlled by the control device according to the second comparative example and a command value in the first simulation;
Fig. 12C is a diagram illustrating a thrust controlled by the control device according to the second comparative example in the first simulation;
Fig. 13 is a diagram illustrating a disturbance applied during a second simulation;
Fig. 14A is a diagram illustrating a position of a target device controlled by the control device according to the embodiment in the second simulation;
Fig. 14B is a diagram illustrating an error between a position controlled by the control device according to the embodiment and a command value in the second simulation;
Fig. 14C is a diagram illustrating a thrust controlled by the control device according to the embodiment in the second simulation;
Fig. 15A is a diagram illustrating a position of a target device controlled by a control device according to a third comparative example in the second simulation;
Fig. 15B is a diagram illustrating an error between a position controlled by the control device according to the third comparative example and a command value in the second simulation;
Fig. 15C is a diagram illustrating a thrust controlled by the control device according to the third comparative example in the second simulation;
Fig. 16A is a diagram illustrating a position of a target device controlled by a control device according to a fourth comparative example in the second simulation;
Fig. 16B is a diagram illustrating an error between a position controlled by the control device according to the fourth comparative example and a command value in the second simulation;
Fig. 16C is a diagram illustrating a thrust controlled by the control device according to the fourth comparative example in the second simulation;
Fig. 17A is a diagram illustrating a position of a target device controlled by a control device according to a modified example in a third simulation;

Fig. 17B is a diagram illustrating an error between a position controlled by the control device according to the modified example and a command value in the third simulation;

Fig. 17C is a diagram illustrating a thrust controlled by the control device according to the modified example in the third simulation;

Fig. 18A is a diagram illustrating a position of a target device controlled by a control device according to a reference example in the third simulation;

Fig. 18B is a diagram illustrating an error between a position controlled by the control device according to the reference example and a command value in the third simulation;

Fig. 18C is a diagram illustrating a thrust controlled by the control device according to the reference example in the third simulation; and

Fig. 19 is a diagram illustrating control blocks of a control system according to the second comparative example.

## DETAILED DESCRIPTION

A preferred embodiment of the present invention will be described with reference to the accompanying drawings. Note that, in the respective drawings, components denoted by the same reference signs have the same or similar configurations.

Fig. 1 is a diagram illustrating a network configuration of a control system 100 according to an embodiment of the present invention. The control system 100 includes a target device 20 controlled on the basis of a control signal, a sensor 30 that measures a physical quantity of the target device 20, and a control device 10 that transmits the control signal to the target device 20 on the basis of the physical quantity measured by the sensor 30 and a command value to perform feedback control.

The target device 20 may be any device that is controlled on the basis of the control signal. Hereinafter, for the sake of concrete explanation, a device that controls a position of a movable part by a servomotor is assumed as the target device 20. In this case, the command value is a target value related to the position of the movable part, and the control signal is a signal for controlling a thrust (torque) of the servomotor.

The sensor 30 may measure an arbitrary physical quantity related to the target device 20. For example, in a case where the target device 20 is a device that controls the position of the movable part, the sensor 30 only needs to measure the position of the movable part, and the physical quantity is the position of the movable part of the target device 20.

The control device 10, the target device 20, and the sensor 30 are communicably connected to each other by a communication network N. The communication network N may be a network of wired communication or wireless communication, for example, a communication network conforming to a standard such as EtherNet/IP or EtherCAT (registered trademark), or a communication network using the local 5G.

Fig. 2 is a diagram illustrating functional blocks of the control device 10 according to the embodiment. The control device 10 includes, for example, a command value generator 11, a command speed arithmetic unit 12, a control signal generator 13, and an acquisition unit 14 as a functional configuration.

The command value generator 11, the command speed arithmetic unit 12, and the control signal generator 13 function as a control unit that generates and controls a command value so as to reduce the deviation of the physical quantity from a target value.

The command value generator 11 generates a command value according to set values such as a target position, a movement time, an allowable maximum speed, and an allowable maximum acceleration. In a case where a control target of the control device 10 is the position of the movable part of the target device 20, the final value of the command value is a target value regarding the position. The command value generator 11 may be a part of the configuration of the control device 10, or may be a separate component. For example, the command value generator 11 may be implemented as a functional unit of a so-called controller. In this case, the control device 10 may be configured to include a so-called controller and a so-called driver (for example, a servo driver) as separate bodies.

The command speed arithmetic unit 12 calculates a command speed by model predictive control (Hereinafter, it is also referred to as "MPC".) using a dynamic characteristic model indicating a dynamic characteristic of the target device 20, the command value, and the physical quantity.

The dynamic characteristic model can be defined by a transfer function indicating a relationship between the control signal for controlling the target device 20 and the physical quantity of the target device 20 measured by the sensor 30.

The control signal generator 13 generates the control signal for controlling the target device 20 by speed control with dead time compensation using a model of the target device 20, dead time, the command speed, and the physical quantity, and outputs the control signal to the target device 20. The dead time compensation is preferably performed using a Smith compensator. The speed control with dead time compensation may be performed using PI control, or may be performed using model following type two-degree-of-freedom control.

The acquisition unit 14 acquires the physical quantity of the target device 20 measured by the sensor 30. The acquired physical quantity is fed back to the command speed arithmetic unit 12 and the control signal generator 13.

Figs. 3 and 4 are diagrams illustrating control blocks of the control system 100 according to the embodiment. Hereinafter, the control blocks of Figs. 3 and 4 will be described in order. Exemplarily, a case where the position of the movable part of the target device 20 is controlled by the control device 10 will be described below.

The control blocks of Fig. 3 will be described. Fig. 3 is a control block diagram in a case where the speed control with dead time compensation is performed using PI control and Smith compensation.

First, the control device 10 generates a command value r (S40). In this example, the command value r is a value related to a position.

Subsequently, the control device 10 inputs the command value r to MPC, and causes the MPC to output a command speed calculated so that a predicted position matches the command value r (S41). The control device 10 inputs the command speed to PI control, and causes the PI control to output a control signal u representing a thrust (S42).

Subsequently, the control device 10 multiplies the control signal u by an element ($1 - e^{-Lms}$) related to dead time Lm (S43), and inputs the result to a model Vm(s) (S44) to estimate a difference between the speed in a case where there is dead time and the speed in a case where it is assumed that there is no dead time. By adding this to a measurement value of the speed that is an output of S47 described later, the speed in a case where it is assumed that there is no dead time is estimated, and the estimated speed is fed back to the PI control (S42). Here, S43 and S44 are processed by a Smith compensator.

The model Vm(s) is a model of an equation of motion followed by the movable part of the target device 20, and may be, for example, a model derived on the basis of an equation of motion established between a thrust applied to the movable part, and an inertial force and a frictional force. For example, $\{1/(Jm \times s + Cm)\}$ can be used as the model Vm(s). Jm represents a model value of an inertia coefficient, Cm represents a model value of a viscous friction coefficient, and s represents a Laplace operator.

Subsequently, when the control device 10 transmits the control signal u output from the PI control to the target device 20, a time delay $e^{-Ls}$ occurs for dead time (S45), and then the control signal u is received by a control target (S46). The servomotor to be controlled is controlled by the thrust that is the control signal u. Here, the control target may be a part (for example, the movable part) or all of the target device 20.

The control target P(s) is a model of a motion equation followed by the movable part of the target device 20, and may be, for example, a model derived on the basis of a motion equation established between a thrust applied to the movable part, and an inertial force and a frictional force. For example, $\{1/(J \times s + C)s\}$ can be used as the control target P(s). J represents a value of an inertia coefficient, C represents a value of a viscous friction coefficient, and s represents a Laplace operator.

Subsequently, a position y, which is the physical quantity to be controlled, read by the sensor 30 is transmitted to the control device 10, and the control device 10 feeds back the position y, which is the physical quantity, to the MPC (S41), differentiates the position y to convert it into a speed (S47), adds the speed to an output value of the Smith compensation (S43 and S44), and feeds back the output value to the PI control (S42).

The control device 10 performs control such that the position y, which is a physical quantity, follows the command value r by repeating such control for each control cycle.

The control blocks of Fig. 4 will be described. Fig. 4 is a control block diagram in a case where the speed control with dead time compensation is performed using the model following type two-degree-of-freedom control and the Smith compensation.

In the control blocks of Fig. 4, an element different from the control blocks of Fig. 3 is that the PI control (S42) illustrated in Fig. 3 is replaced with the model following type two-degree-of-freedom control (S42a to S42e) illustrated in Fig. 4. The other elements are the same as those of the control blocks of Fig. 3. Therefore, here, the element different from the control blocks of Fig. 3 will be mainly described.

The model following type two-degree-of-freedom control (S42a to S42e) in Fig. 4 is common with the PI control (S42) in Fig. 3 in that the speed corresponding to the position y, which is the physical quantity to be controlled, is controlled to follow the command speed output from the MPC.

As illustrated in Fig. 4, the control blocks for performing the model following type two-degree-of-freedom control can include, for example, an element (S42a) that converts the command speed into an acceleration with a model speed control proportional gain Kmvp, an element (S42b) that integrates the acceleration (1/s), an element (S42c) that adjusts the speed with a speed control integral gain Kvi and integral (1/s), an element (S42d) that converts the speed into an acceleration with a speed control proportional gain Kvp, and an element (S42e) that multiplies the acceleration by a model value Jm of an inertia coefficient.

Here, the model speed control proportional gain Kmvp in the model unit is preferably set by multiplying the speed control proportional gain Kvp in the feedback control unit by an appropriate ratio. For example, $Kmvp = 2 \times Kvp$ can be set.

Furthermore, a control target characteristic GPL(s) seen from the MPC (S41) can be expressed by the following Formula (1). In Formula (1), Lm represents dead time, and s represents a Laplace operator.

$$GPL(s) = [1/\{1 + (1/Kmvp)s\}s]e^{-Lms} \cdots (1)$$

Fig. 5 is a diagram illustrating a physical configuration of the control device 10 according to the embodiment. The control device 10 includes a central processing unit (CPU) 10a corresponding to an arithmetic unit, a random access memory (RAM) 10b corresponding to a storage unit, a read only memory (ROM) 10c corresponding to a storage unit, a communication unit 10d, an input unit 10e, and a display unit 10f. These components are connected via a bus so as to be able to transmit and receive data to and from each other. Note that, in the present example, a case where the control device 10 includes one computer will be described, but the control device 10 may be realized by combining a plurality of computers. Furthermore, the configuration illustrated in Fig. 5 is an example, and the control device 10 may have a configuration other than these or may not have some of these configurations.

The CPU 10a executes a program stored in the RAM 10b or the ROM 10c, and functions as a control unit that performs various types of control and calculation and processing of data. For example, the CPU 10a executes a program (control program) for controlling the target device 20. Furthermore, the CPU 10a receives various data from the input unit 10e and the communication unit 10d, and displays a calculation result of the data on the display unit 10f or stores the calculation result in the RAM 10b.

The RAM 10b can rewrite data in the storage unit, and may be configured by, for example, a semiconductor storage element. The RAM 10b may store, for example, a program executed by the CPU 10a and data used in the program. Note that these are examples, and data other than these may be stored in the RAM 10b, or some of these may not be stored.

The ROM 10c is capable of reading data in the storage unit, and may be configured by, for example, a semiconductor storage element. The ROM 10c may store, for example, a control program and data that is not rewritten.

The communication unit 10d is an interface that connects the control device 10 to another device. The communication unit 10d may be connected to a communication network such as a LAN.

The input unit 10e receives data input from a user, and may include, for example, a keyboard and a touch panel.

The display unit 10f visually displays a calculation result by the CPU 10a, and may be configured by, for example, a liquid crystal display (LCD). The display unit 10f may display, for example, the control signal and the physical quantity in time series.

The control program may be provided by being stored in a computer-readable storage medium such as the RAM 10b or the ROM 10c, or may be provided via a communication network connected by the communication unit 10d. In the control device 10, the various functions described above are implemented by the CPU 10a executing the control program. Note that these physical configurations are merely examples, and may not necessarily be independent configurations. For example, the control device 10 may include a large-scale integration (LSI) in which the CPU 10a, the RAM 10b, and the ROM 10c are integrated.

Next, an example of control processing executed by the control device 10 according to the embodiment will be described with reference to Fig. 6.

First, the control device 10 executes initial processing (step S101). The initial processing includes, for example, discretization processing of an MPC internal model, discretization processing of a speed compensation amount calculation model, initialization processing of a control variable, and the like. The discretization processing includes, for example, processing of dividing continuous information for each control period. The initialization processing of the control variable includes, for example, processing of initializing a parameter used in the MPC to 0.

Subsequently, the control device 10 starts control loop processing. The control loop processing is processing repeatedly executed in each control cycle (processing from step S102 to step S105 described later).

In the control loop processing, first, the control device 10 executes position control by the MPC (step S102).

Subsequently, the control device 10 calculates a speed compensation amount by dead time compensation (step S103).

Subsequently, the control device 10 executes speed control by PI control (step S104).

Subsequently, the control device 10 determines whether or not to end the control loop processing (step S105). In a case where this determination is NO (step S105; NO), the process proceeds to step S102, and in a case where the determination is YES (step S105; YES), the control loop processing is ended and the present process is ended.

[Modified example]

The embodiment described above is merely examples of the present invention in all respects. It goes without saying that various improvements and modifications can be made without departing from the scope of the present invention. That is, in practicing the present invention, a specific configuration according to the embodiment may be adopted as appropriate. Furthermore, the above-described embodiment is intended to facilitate understanding of the present invention, and are not intended to limit and interpret the present invention. Each element included in the embodiment and the arrangement, material, condition, shape, size, and the like thereof are not limited to those exemplified, and can be appropriately changed.

For example, in the above-described embodiment, the control signal generated by the control signal generator 13 of the control device 10 illustrated in Fig. 2 is output to the target device 20, but the configuration for controlling the target device 20 is not limited thereto. As an example, in a case where the target device 20 and the sensor 30 are arranged in a local place (region) such as a factory site, a PI controller may be provided on the local side, and a control signal may be output from the PI controller to the target device 20.

In this case, in the functional configuration of the control device 10 illustrated in Fig. 2, the control signal generator 13 is preferably provided in the PI controller on the local side. Then, the command speed calculated by the command speed arithmetic unit 12 of the control device 10 is preferably output to the PI controller, and the control signal generated by the control signal generator 13 of the PI controller is preferably output to the target device 20.

Here, in the control system 100 according to the above-described embodiment, the time delay $e^{-Ls}$ due to the dead time occurring between the control device 10 and the target device 20 occurs between the control device 10 and the PI controller in the control system according to the present modified example.

Fig. 7 is a control block diagram of a control system according to the present modified example. A range surrounded by a broken line in Fig. 7 is a local L side. Then, the PI controller, the target device 20, and the sensor 30 are arranged on the local L side.

The control blocks of Fig. 7 are different from the control blocks of Fig. 4 in that, among the control blocks of the control system according to the embodiment of Fig. 4, a time delay $e^{-Ls}$ (S45) due to dead time generated between the control device 10 and the target device 20 moves between the control device 10 and the PI controller, and dead time compensation (S43 and S44) by the Smith compensator is omitted. The dead time compensation (S43 and S44) is omitted because there is no dead time between the PI controller and the target device 20 arranged on the local L side.

Out of the reference signs in Fig. 7, the blocks denoted by the same reference signs as those in Fig. 4 have similar functions, and thus the description thereof will be omitted here.

Fig. 8 illustrates, as a reference example of the present modified example, a control block in which the MPC (S41) is replaced with a P control loop (S41P) among the control blocks of the control system according to the present modified example of Fig. 7.

The P control loop (S41P) of Fig. 8 calculates a command speed based on the command value and the position y which is the physical quantity to be controlled, and outputs the command speed to the local L side.

As illustrated in Fig. 8, the P control loop (S41P) can include, for example, an element (S41a) that differentiates (s) a position into a speed, an element (S41b) that adjusts the speed with a speed feedforward gain Kvff, an element (S41c) that adjusts a position with a position control proportional gain Kpp, and elements (S41d and S41e) that perform dead time compensation with the Smith compensator.

A control target characteristic GP(s) not including dead time as viewed from the P control loop (S41P) can be expressed by the following Formula (2). In Formula (2), s represents a Laplace operator.

$$GP(s) = 1/\{1 + (1/Kmvp)s\}s \cdots (2)$$

[Simulation results]

Results of a simulation performed to verify the effect of the control system 100 according to the embodiment will be described below.

[First simulation]

Conditions at the time of the first simulation are as follows. An inertial mass is 10 [kg], a viscous friction coefficient is 0 [Ns/m], a control period is 0.25 [ms], and the dead time period number of the Smith compensator is 20. As illustrated in Fig. 9, a command position which is the command value r monotonously increases from the origin to 100 [mm] from the time 10 [ms] to 250 [ms], and the maximum acceleration during the movement is 10,000 [mm/s$^2$]. In the graph of the drawing, a horizontal axis represents elapsed time [ms], and a vertical axis represents the command position [mm]. Furthermore, it is assumed that no model error and no disturbance occur in the first simulation.

Figs. 10A to 10C display results of the first simulation for the control device 10 according to the embodiment, Figs. 11A to 11C display results of the first simulation for the control device according to a first comparative example, and Figs. 12A to 12C display results of the first simulation for the control device according to a second comparative example.

Control blocks of the control device according to the second comparative example is illustrated in Fig. 19. As illustrated in Fig. 19, the control device according to the second comparative example is different from the control device 10 according to the embodiment in that the MPC (S41) and the differential element (S47) are removed from the control blocks of the control device 10 according to the embodiment illustrated in Fig. 3, the PI control (S42) is replaced with PID control (S42PI), and the model Vm(s) (S44) for the speed is replaced with a model Pm(s) (S44P) for a position. The control device according to the first comparative example assumes a case where there is no dead time in the configuration of the second comparative example. Therefore, the control device according to the first comparative example is obtained by removing the dead time (S45) and the dead time compensation by the Smith compensator (S43 and S44P) from the control blocks of the control device according to the second comparative example illustrated in Fig. 19.

Fig. 10A is a diagram illustrating a position y1 of the target device 20 controlled by the control device 10 according to the embodiment. In the drawing, the position y1 of the target device 20 is indicated by a solid line, and a command value r serving as the command position is indicated by a broken line. Fig. 10B is a diagram illustrating an error (deviation) between the position y1 controlled by the control device 10 according to the embodiment and the command value r. Fig. 10C is a diagram illustrating a thrust controlled by the control device 10 according to the embodiment. The thrust is a control signal transmitted from the control device 10 to the target device 20.

Fig. 11A is a diagram illustrating a position y1a of a target device controlled by the control device according to the first comparative example. In the drawing, the position y1a of the target device is indicated by a solid line, and a command value r serving as the command position is indicated by a broken line. Fig. 11B is a diagram illustrating an error (deviation) between the position y1a controlled by the control device according to the first comparative example and the command value r. Fig. 11C is a diagram illustrating a thrust controlled by the control device according to the first comparative example.

Fig. 12A is a diagram illustrating a position y1b of a target device controlled by the control device according to the second comparative example. In the drawing, the position y1b of the target device is indicated by a solid line, and a command value r serving as the command position is indicated by a broken line. Fig. 12B is a diagram illustrating an error (deviation) between the position y1b controlled by the control device according to the second comparative example and the command value r. Fig. 12C is a diagram illustrating a thrust controlled by the control device according to the second comparative example.

Comparing the embodiment with the first and second comparative examples, the position error of the embodiment illustrated in Fig. 10B is significantly suppressed as compared with the position errors of the first and second comparative examples illustrated in Figs. 11B and 12B. That is, the embodiment shows that higher command followability can be obtained as compared with the first and second comparative examples (See Figs. 10B, 11B, and 12B.).

Note that the reason why the embodiment exhibits the command followability higher than that of the first comparative example having no dead time is that the MPC performs control so as to cancel a response delay due to the dead time and other factors using a future command value. In the Smith compensation, since it is known in advance that the dead time comes out of the feedback control loop and is delayed by the dead time, it is possible to obtain the followability equivalent to that of the first comparative example in the second comparative example by giving the command value by the dead time earlier.

[Second simulation]

The second simulation is a simulation in a case where a disturbance occurs under the same conditions as the first simulation. As illustrated in Fig. 13, a disturbance is applied by +50 [N] in a pulse shape for 50 [ms] from the time 100 [ms]. In the graph of the drawing, a horizontal axis represents elapsed time [ms], and a vertical axis represents a magnitude [N] of the disturbance.

Figs. 14A to 14C display results of the second simulation for the control device 10 according to the embodiment, Figs. 15A to 15C display results of the second simulation for the control device according to a third comparative example, and Figs. 16A to 16C display results of the second simulation for the control device according to a fourth comparative example.

The control device according to the third comparative example is the same as the control device according to the second comparative example. The control device according to the fourth comparative example is different from the control device 10 according to the embodiment in that the MPC (S41) in the control blocks of the control device 10 according to the embodiment illustrated in Fig. 3 is replaced with P control. In addition, the control device according to the fourth comparative example is different from the control device 10 according to the embodiment also in that a high-pass filter is provided in a loop of the dead time compensation (S43 and S44) by the Smith compensator and a low-pass filter is provided in a preceding stage of the P control, similarly to Fig. 7 of Japanese Patent Application Laid-Open No.

2014-81821. In the fourth comparative example, a setting value of the high-pass filter is exemplarily set to {0.01s/(0.01s + 1)}, and a setting value of the low-pass filter is exemplarily set to {1/(0.01s + 1)}.

Fig. 14A is a diagram illustrating a position y2 of the target device 20 controlled by the control device 10 according to the embodiment. In the drawing, the position y2 of the target device 20 is indicated by a solid line, and a command value r serving as a command position is indicated by a broken line. Fig. 14B is a diagram illustrating an error (deviation) between the position y2 controlled by the control device 10 according to the embodiment and the command value r. Fig. 14C is a diagram illustrating a thrust controlled by the control device 10 according to the embodiment. The thrust is a control signal transmitted from the control device 10 to the target device 20.

Fig. 15A is a diagram illustrating a position y2a of a target device controlled by the control device according to the third comparative example. In the drawing, the position y2a of the target device is indicated by a solid line, and a command value r serving as the command position is indicated by a broken line. Fig. 15B is a diagram illustrating an error (deviation) between the position y2a controlled by the control device according to the third comparative example and the command value r. Fig. 15C is a diagram illustrating a thrust controlled by the control device according to the third comparative example.

Fig. 16A is a diagram illustrating a position y2b of the target device controlled by the control device according to the fourth comparative example. In the drawing, the position y2b of a target device is indicated by a solid line, and a command value r serving as the command position is indicated by a broken line. Fig. 16B is a diagram illustrating an error (deviation) between the position y2b controlled by the control device according to the fourth comparative example and the command value r. Fig. 16C is a diagram illustrating a thrust controlled by the control device according to the fourth comparative example.

Comparing the embodiment with the third and fourth comparative examples, the position error of the embodiment illustrated in Fig. 14B is significantly suppressed as compared with the position errors of the third and fourth comparative examples illustrated in Figs. 15B and 16B. That is, the embodiment shows that higher command followability can be obtained as compared with the third and fourth comparative examples (See Figs. 14B, 15B, and 16B.).

Note that, as illustrated in Fig. 15B, it can be seen that an offset occurs with respect to the disturbance in the third comparative example.

[Third simulation]

Under the same conditions as in the first simulation, the control device according to the modified example and the control device according to the reference example were simulated.

Figs. 17A to 17C illustrate results of the third simulation for the control device according to the modified example, and Figs. 18A to 18C illustrate results of the third simulation for the control device according to the reference example.

Fig. 17A is a diagram illustrating a position y3 of a target device controlled by the control device according to the modified example. In the drawing, the position y3 of the target device is indicated by a solid line, and a command value r, which is the command position, is indicated by a broken line. Fig. 17B is a diagram illustrating an error (deviation) between the position y3 controlled by the control device according to the modified example and the command value r. Fig. 17C is a diagram illustrating a thrust controlled by the control device according to the modified example. The thrust is a control signal transmitted from the control device to the target device.

Fig. 18A is a diagram illustrating a position y3a of a target device controlled by the control device according to the reference example. In the drawing, the position y3a of the target device is indicated by a solid line, and a command value r, which is the command position, is indicated by a broken line. Fig. 18B is a diagram illustrating an error (deviation) between the position y3a controlled by the control device according to the reference example and the command value r. Fig. 18C is a diagram illustrating a thrust controlled by the control device according to the reference example.

Comparing the modified example with the reference example, the position error of the modified example illustrated in Fig. 17B is significantly suppressed as compared with the position error of the reference example illustrated in Fig. 18B. That is, the modified example shows that high command followability can be obtained as compared with the reference example (See Fig. 17B and Fig. 18B.).

As described above, according to the control system 100 of the embodiment, the command value r for the target device 20 is generated, the command speed is calculated by the MPC using the dynamic characteristic model indicating the relationship between the control signal u and the position y, which is the physical quantity of the target device 20, the command value r, and the position y, which is the physical quantity, and the control signal u can be generated and output to the target device 20 by the speed control with dead time compensation using the model of the target device 20, the dead time, the command speed, and the position y, which is the physical quantity.

As a result, it is possible to perform control such that the deviation between the command value and the position y, which is a physical quantity, is reduced by the MPC while compensating for the time delay $e^{-Ls}$ due to dead time.

Therefore, according to the control system 100 according to the embodiment, followability to the command value r can be improved without requiring difficult adjustment of the high-pass filter and the low-pass filter.

[Appendix]

Aspects in the embodiment include the following disclosure.

(Appendix 1)

A control system (100) including:

a target device (20) configured to be controlled based on a control signal;
a sensor (30) configured to measure a physical quantity of the target device (20); and
a control device (10) configured to output the control signal to the target device (20) based on the physical quantity and a command value, and perform feedback control,
in which the control device (10) includes:

a command value generator (11) configured to generate the command value for the target device (20);
a command speed arithmetic unit (12) configured to calculate a command speed by model predictive control using a dynamic characteristic model indicating a relationship between the control signal and the physical quantity, the command value, and the physical quantity; and
a control signal generator (13) configured to generate the control signal by speed control with dead time compensation using a model of the target device (20), dead time, the command speed, and the physical quantity, and output the control signal to the target device (20).

(Appendix 2)

A control system (100) including:

a target device (20) configured to be controlled based on a control signal;
a sensor (30) configured to measure a physical quantity of the target device (20); and
a control device (10) configured to output the control signal to the target device (20) based on the physical quantity and a command value, and perform feedback control,
in which
the control device (10) includes a first control device and a second control device provided in a same area as the target device (20) and the sensor (30),
the first control device includes:

a command value generator (11) configured to generate the command value for the target device (20); and
a command speed arithmetic unit (12) configured to calculate a command speed by model predictive control using a dynamic characteristic model indicating a relationship between the control signal and the physical quantity, the command value, and the physical quantity, and output the command speed to the second control device, and

the second control device includes a control signal generator (13) configured to generate the control signal by a speed control loop using a model of the target device (20), the command speed, and the physical quantity, and output the control signal to the target device (20).

(Appendix 3)

A control device (10) configured to output a control signal to a target device (20) based on a physical quantity of the target device (20) measured by a sensor (30) and a command value to perform feedback control, the control device (10) including:

a command value generator (11) configured to generate the command value for the target device (20) controlled based on the control signal;
a command speed arithmetic unit (12) configured to calculate a command speed by model predictive control using a dynamic characteristic model indicating a relationship between the control signal and the physical quantity, the command value, and the physical quantity; and
a control signal generator (13) configured to generate the control signal by speed control with dead time compensation using a model of the target device (20), dead time, the command speed, and the physical quantity, and output the control signal to the target device (20).

(Appendix 4)

A control method executed by a control device (10) configured to output a control signal to a target device (20) based on a physical quantity of the target device (20) measured by a sensor (30) and a command value to perform feedback control, the control method including:

generating the command value for the target device (20) controlled based on the control signal;
calculating a command speed by model predictive control using a dynamic characteristic model indicating a relationship between the control signal and the physical quantity, the command value, and the physical quantity; and
generating the control signal by speed control with dead time compensation using a model of the target device (20), dead time, the command speed, and the physical quantity, and outputting the control signal to the target device (20).

(Appendix 5)

A control program that causes a control device (10) configured to output a control signal to a target device (20) based on a physical quantity of the target device (20) measured by a sensor (30) and a command value, and perform feedback control to function as:

a command value generator (11) configured to generate the command value for the target device (20) controlled based on the control signal;
a command speed arithmetic unit (12) configured to calculate a command speed by model predictive control using a dynamic characteristic model indicating a relationship between the control signal and the physical quantity, the command value, and the physical quantity; and
a control signal generator (13) configured to generate the control signal by speed control with dead time compensation using a model of the target device (20), dead time, the command speed, and the physical quantity, and output the control signal to the target device (20).

DESCRIPTION OF SYMBOLS

| | |
|---|---|
| 10 | control device |
| 10a | CPU |
| 10b | RAM |
| 10c | ROM |
| 10d | communication unit |
| 10e | input unit |
| 10f | display unit |
| 11 | command value generator |
| 12 | command speed arithmetic unit |
| 13 | control signal generator |
| 14 | acquisition unit |
| 20 | target device |
| 30 | sensor |
| 100 | control system |

## Claims

**1.** A control system (100) comprising:

a target device (20) configured to be controlled based on a control signal;
a sensor (30) configured to measure a physical quantity of the target device (20); and
a control device (10) configured to output the control signal to the target device (20) based on the physical quantity and a command value, and perform feedback control,
wherein the control device (10) includes:

a command value generator (11) configured to generate the command value for the target device (20);
a command speed arithmetic unit (12) configured to calculate a command speed by model predictive control using a dynamic characteristic model indicating a relationship between the control signal and the physical quantity, the command value, and the physical quantity; and
a control signal generator (13) configured to generate the control signal by speed control with dead time compensation using a model of the target device (20), dead time, the command speed, and the physical quantity, and output the control signal to the target device (20).

**2.** The control system (100) according to claim 1, wherein the speed control with dead time compensation includes PI control.

**3.** The control system (100) according to claim 1, wherein the speed control with dead time compensation includes a model following type two-degree-of-freedom control.

**4.** A control system (100) comprising:

a target device (20) configured to be controlled based on a control signal;
a sensor (30) configured to measure a physical quantity of the target device (20); and
a control device (10) configured to output the control signal to the target device (20) based on the physical quantity and a command value, and perform feedback control,
wherein
the control device (10) includes a first control device and a second control device provided in a same area as the target device (20) and the sensor (30),
the first control device includes:

a command value generator (11) configured to generate the command value for the target device (20); and
a command speed arithmetic unit (12) configured to calculate a command speed by model predictive control using a dynamic characteristic model indicating a relationship between the control signal and the physical quantity, the command value, and the physical quantity, and output the command speed to the second control device, and

the second control device includes a control signal generator (13) configured to generate the control signal by a speed control loop using a model of the target device (20), the command speed, and the physical quantity, and output the control signal to the target device (20).

**5.** The control system (100) according to claim 4, wherein the speed control loop includes a model following type two-degree-of-freedom control.

**6.** A control device (10) configured to output a control signal to a target device (20) based on a physical quantity of the target device (20) measured by a sensor (30) and a command value to perform feedback control, the control device (10) comprising:

a command value generator (11) configured to generate the command value for the target device (20) controlled based on the control signal;
a command speed arithmetic unit (12) configured to calculate a command speed by model predictive control using a dynamic characteristic model indicating a relationship between the control signal and the physical quantity, the command value, and the physical quantity; and
a control signal generator (13) configured to generate the control signal by speed control with dead time compensation using a model of the target device (20), dead time, the command speed, and the physical quantity, and output the control signal to the target device (20).

**7.** A control method executed by a control device (10) configured to output a control signal to a target device (20) based on a physical quantity of the target device (20) measured by a sensor (30) and a command value to perform feedback control, the control method comprising:

generating the command value for the target device (20) controlled based on the control signal;
calculating a command speed by model predictive control using a dynamic characteristic model indicating a relationship between the control signal and the physical quantity, the command value, and the physical quantity;

and
generating the control signal by speed control with dead time compensation using a model of the target device (20), dead time, the command speed, and the physical quantity, and outputting the control signal to the target device (20).

**8.** A control program that causes a control device (10) configured to output a control signal to a target device (20) based on a physical quantity of the target device (20) measured by a sensor (30) and a command value, and perform feedback control to function as:

a command value generator (11) configured to generate the command value for the target device (20) controlled based on the control signal;
a command speed arithmetic unit (12) configured to calculate a command speed by model predictive control using a dynamic characteristic model indicating a relationship between the control signal and the physical quantity, the command value, and the physical quantity; and
a control signal generator (13) configured to generate the control signal by speed control with dead time compensation using a model of the target device (20), dead time, the command speed, and the physical quantity, and output the control signal to the target device (20).

FIG. 1

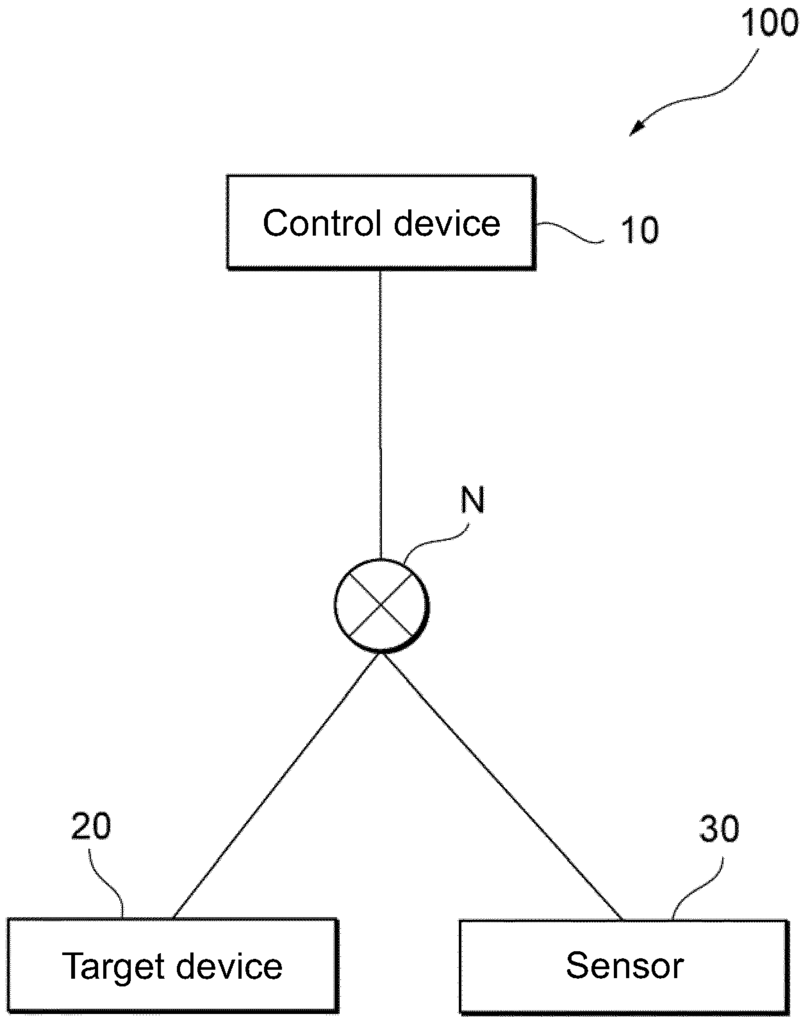

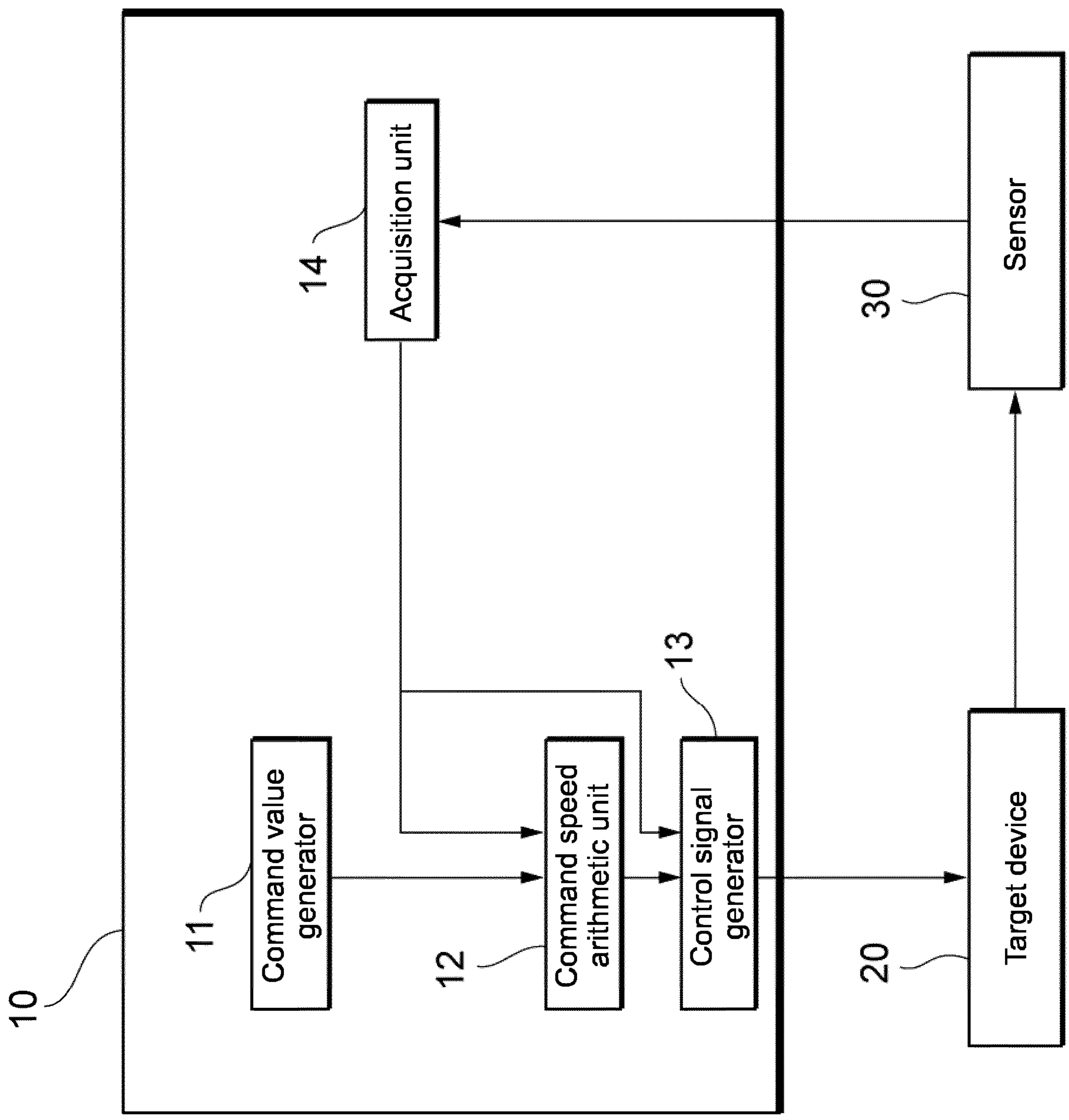
10
11
Command value generator
12
Command speed arithmetic unit
13
Control signal generator
14
Acquisition unit
20
Target device
30
Sensor

FIG. 2

FIG. 3

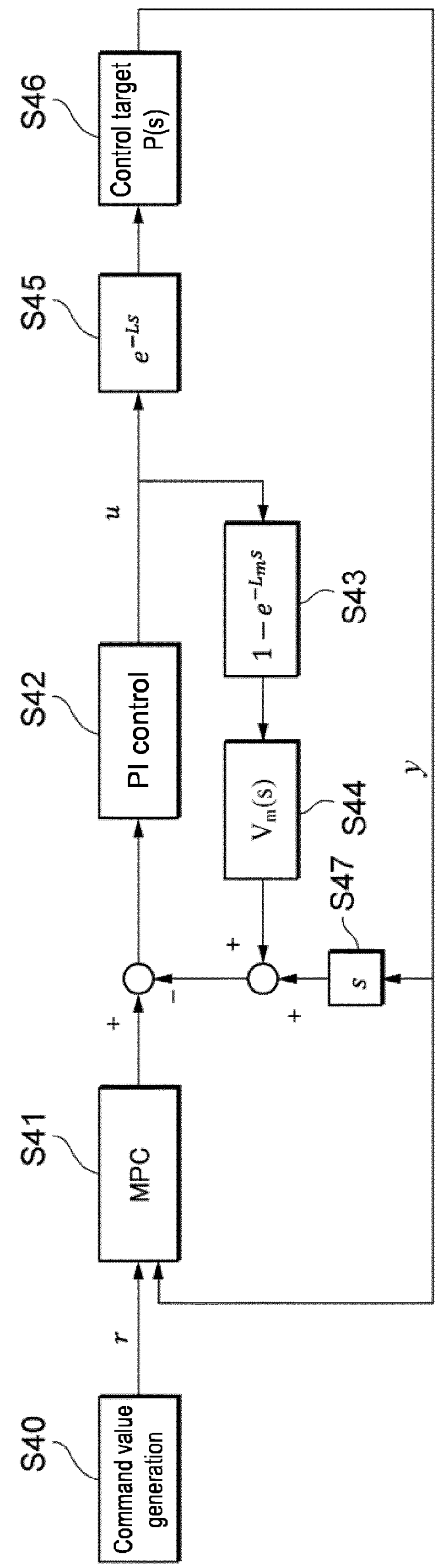
S40
Command value generation
r
S41
MPC
+
−
+
+
S47
s
S42
PI control
u
S43
1 − e^{−L_m s}
S44
V_m(s)
y
S45
e^{−Ls}
S46
Control target P(s)

FIG. 4

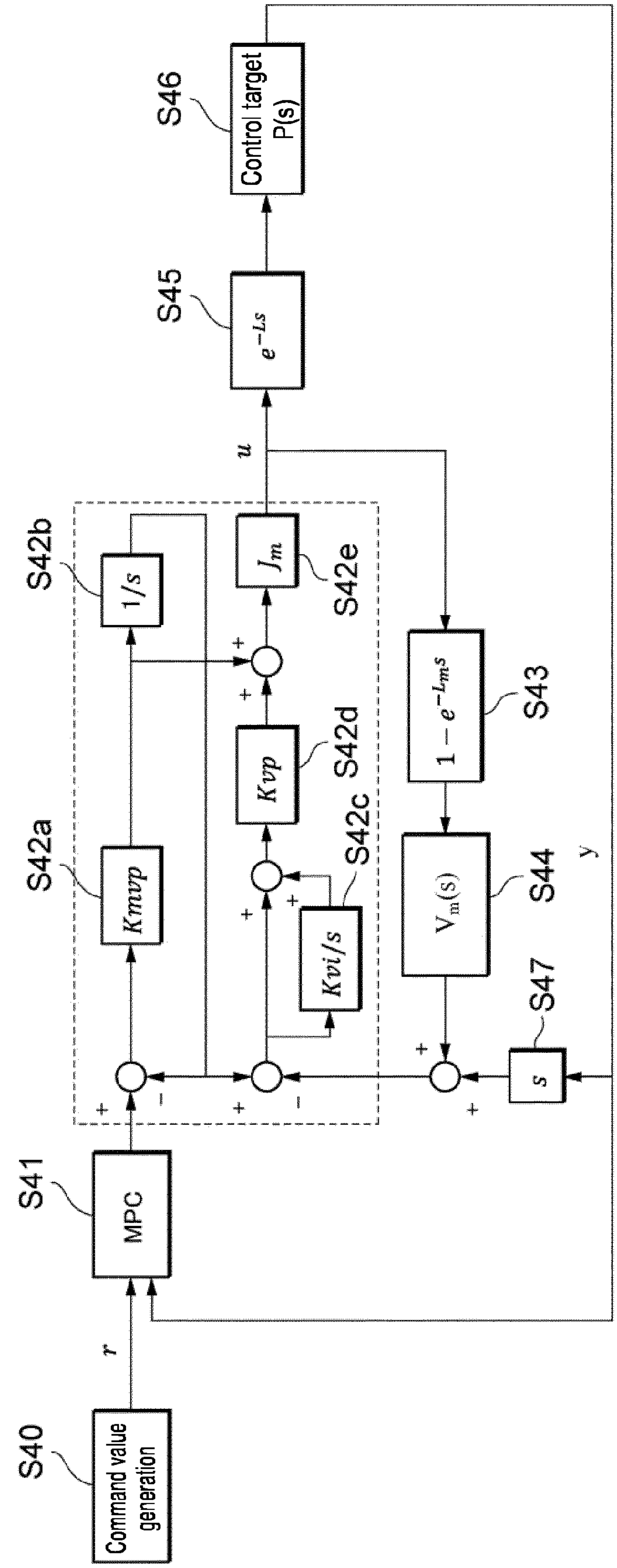
S40
Command value generation
r
S41
MPC
S42a
Kmvp
S42b
1/s
S42c
Kvi/s
S42d
Kvp
S42e
$J_m$
u
S43
$1 - e^{-L_m s}$
S44
$V_m(s)$
S45
$e^{-Ls}$
S46
Control target P(s)
S47
s
y

FIG. 5

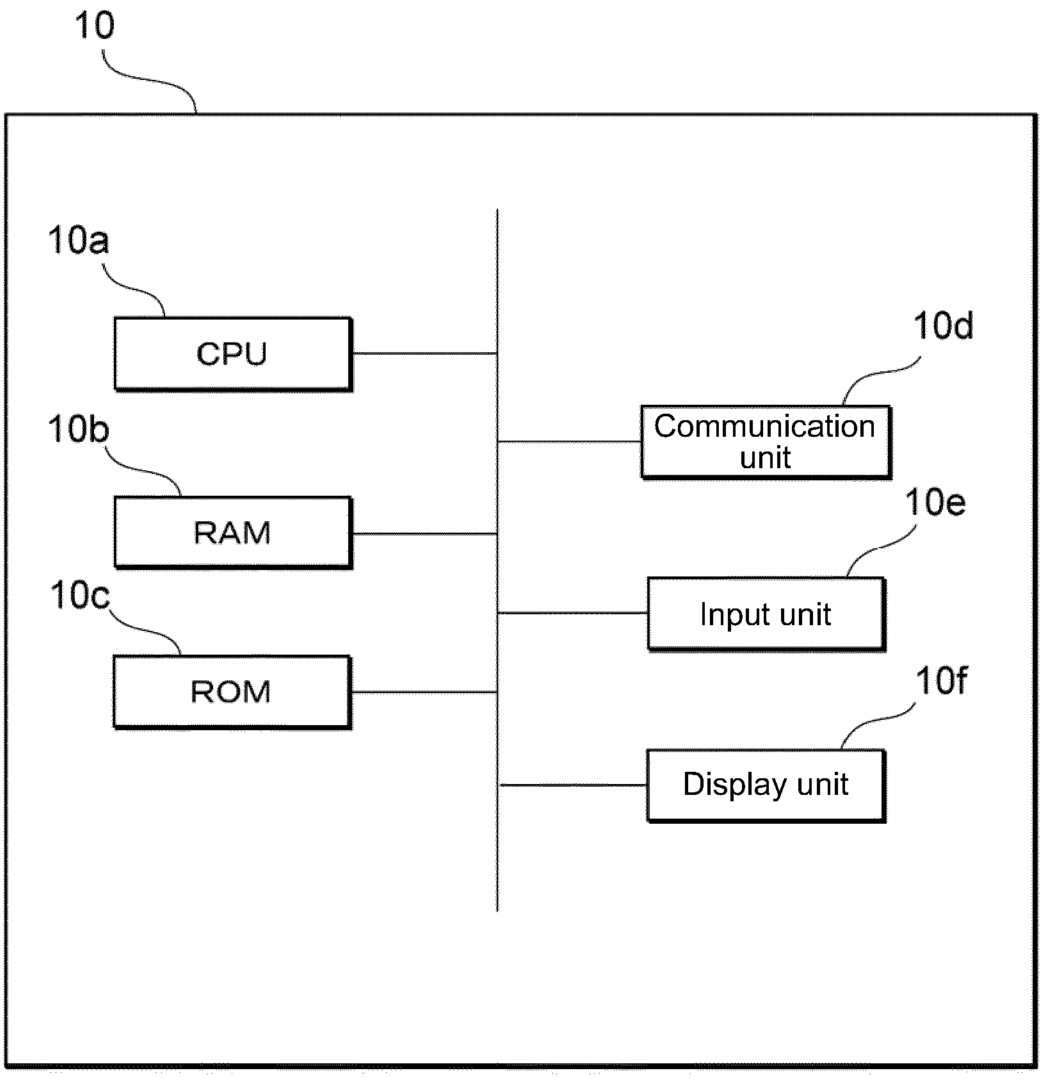
10
10a
CPU
10b
RAM
10c
ROM
10d
Communication unit
10e
Input unit
10f
Display unit

FIG. 6

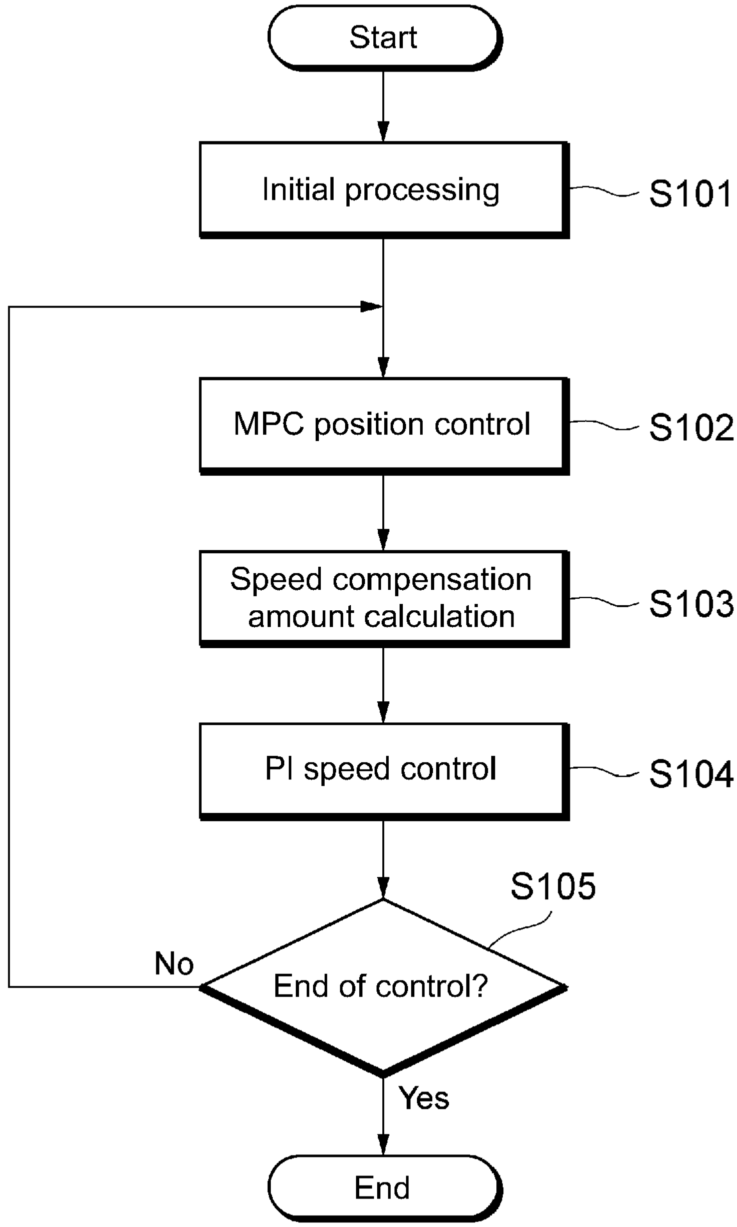
Start
Initial processing
S101
MPC position control
S102
Speed compensation amount calculation
S103
PI speed control
S104
S105
End of control?
No
Yes
End

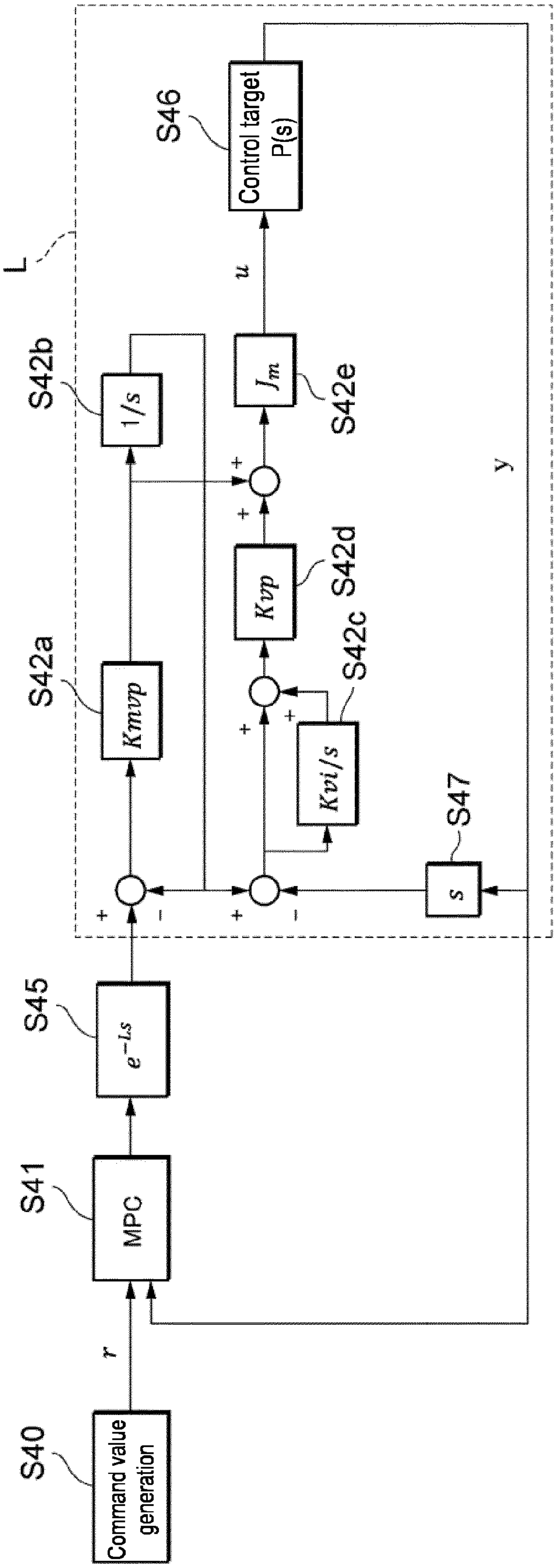
S40
Command value generation
r
S41
MPC
S45
e^{-Ls}
S42a
Kmvp
S42b
1/s
L
S42c
Kvi/s
S42d
Kvp
S42e
Jm
u
S46
Control target P(s)
S47
s
y

FIG. 7

FIG. 8

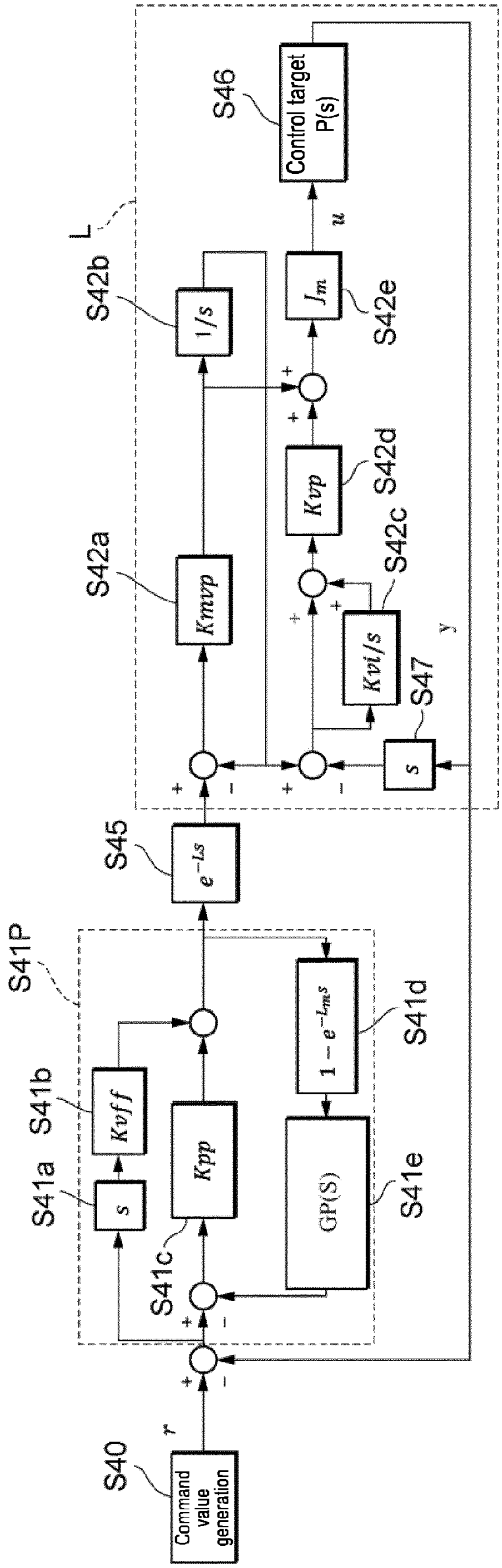
S40
Command value generation
r
S41P
S41a
s
S41b
Kvff
S41c
Kpp
S41d
1 − e^{−Lms}
S41e
GP(S)
S45
e^{−Ls}
L
S42a
Kmvp
S42b
1/s
S42c
Kvi/s
S42d
Kvp
S42e
Jm
u
S46
Control target P(s)
S47
s
y

FIG. 9

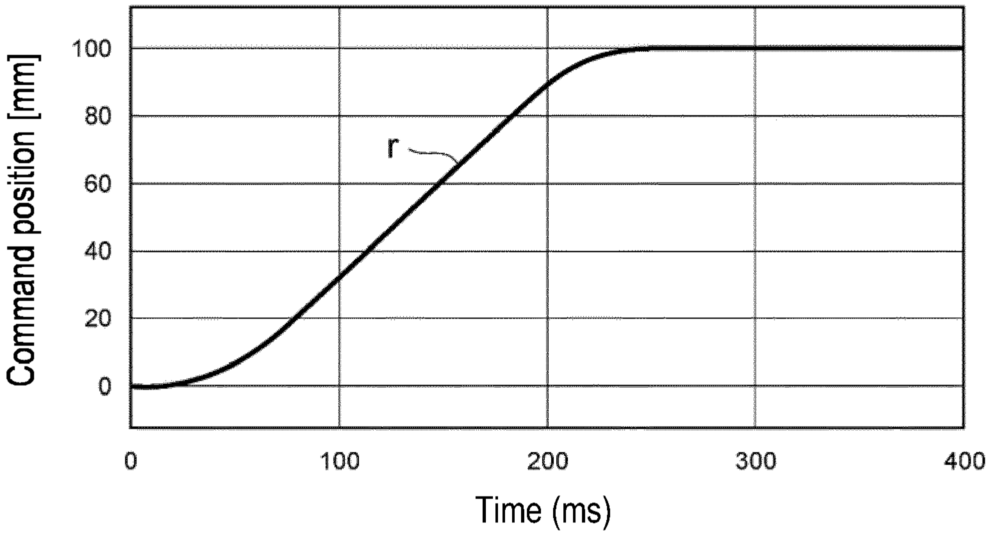
Command position [mm]
100
80
60
40
20
0
r
0
100
200
300
400
Time (ms)

FIG. 10A

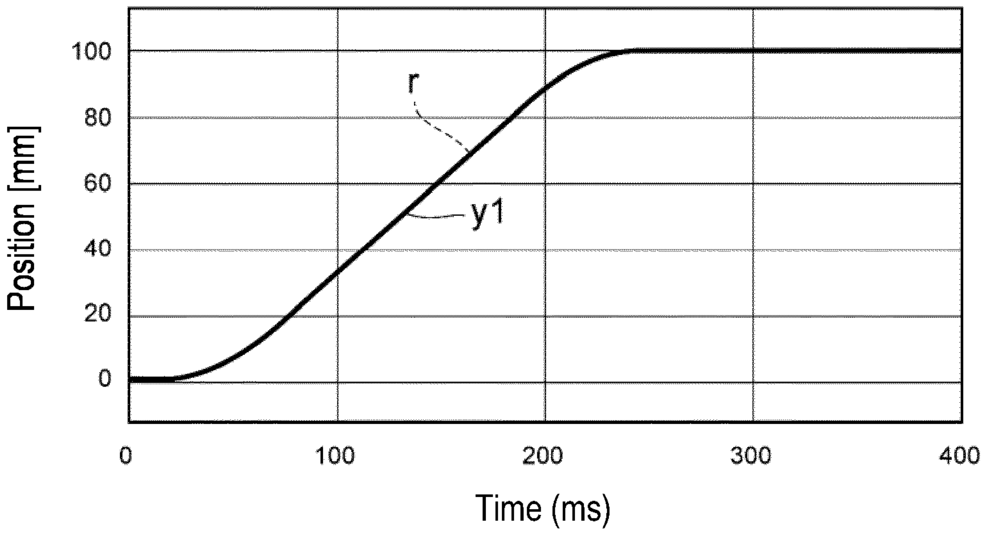
Position [mm]
100
80
60
40
20
0
r
y1
0
100
200
300
400
Time (ms)

FIG. 10B

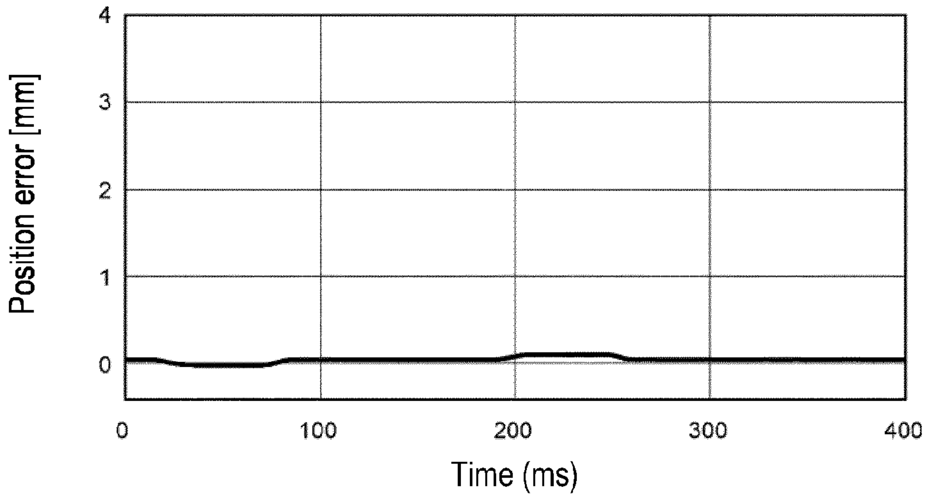


FIG. 10C

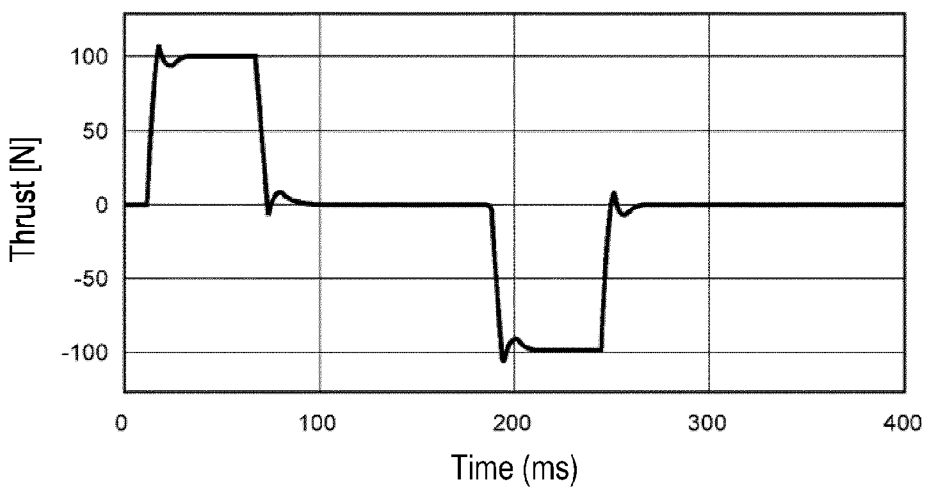


FIG. 11A

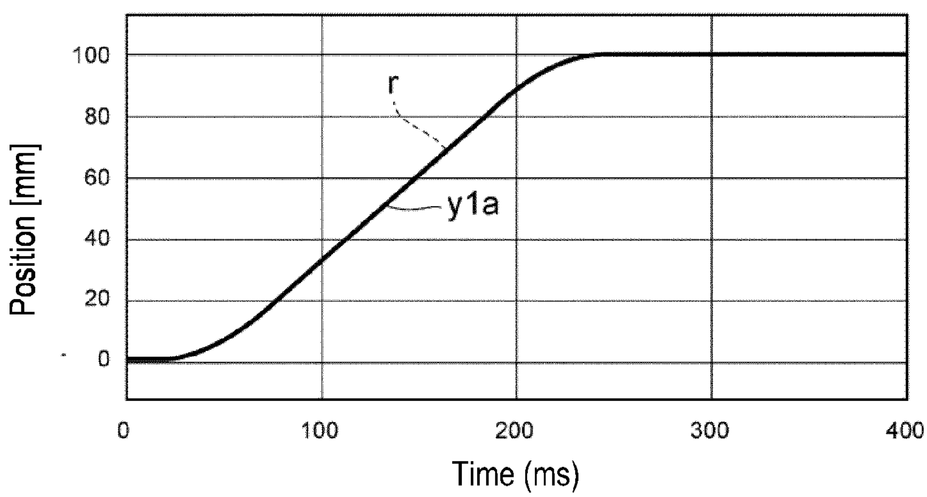

FIG. 11B

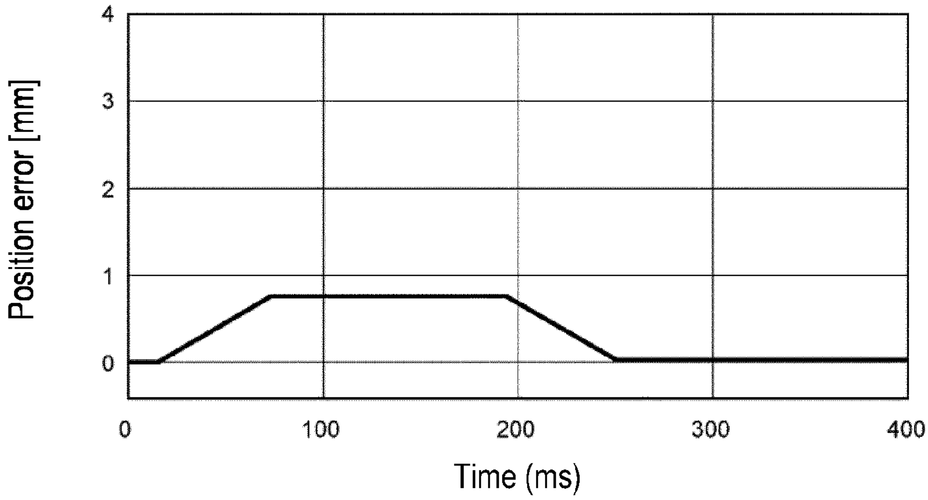


FIG. 11C

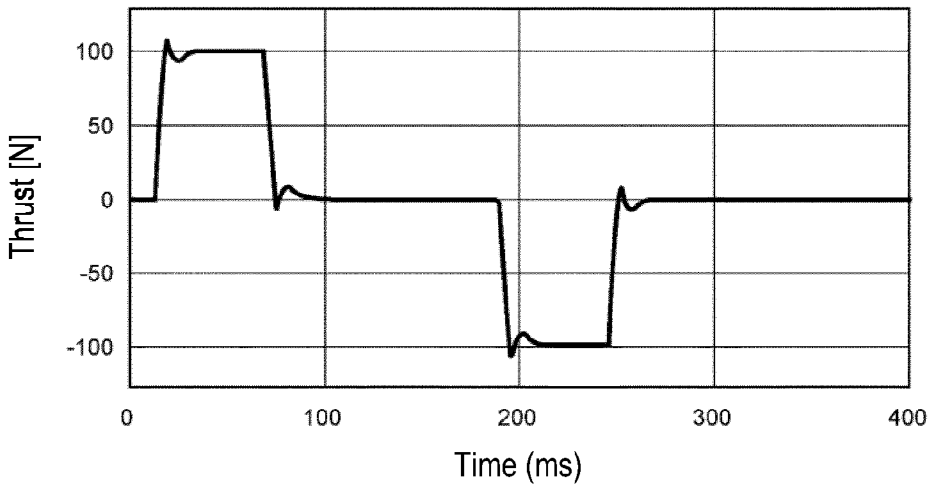


FIG. 12A

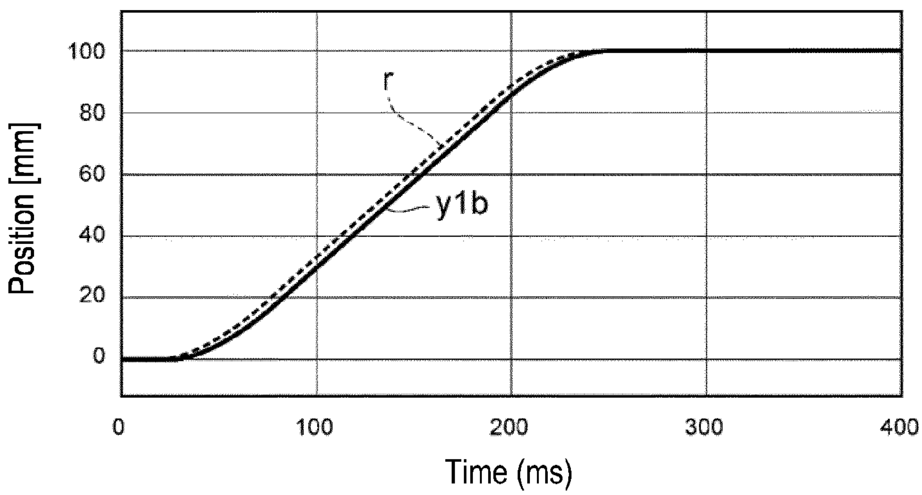

FIG. 12B

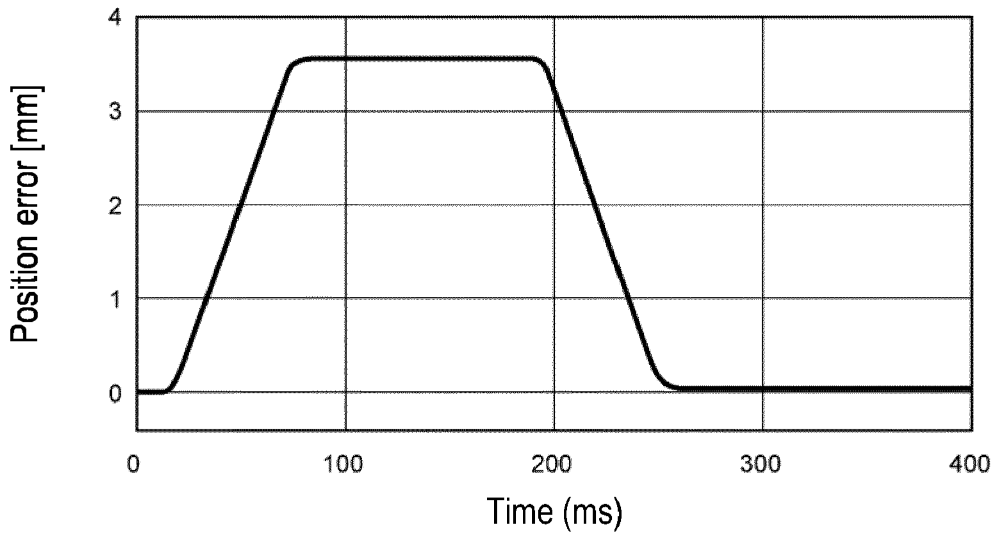


FIG. 12C

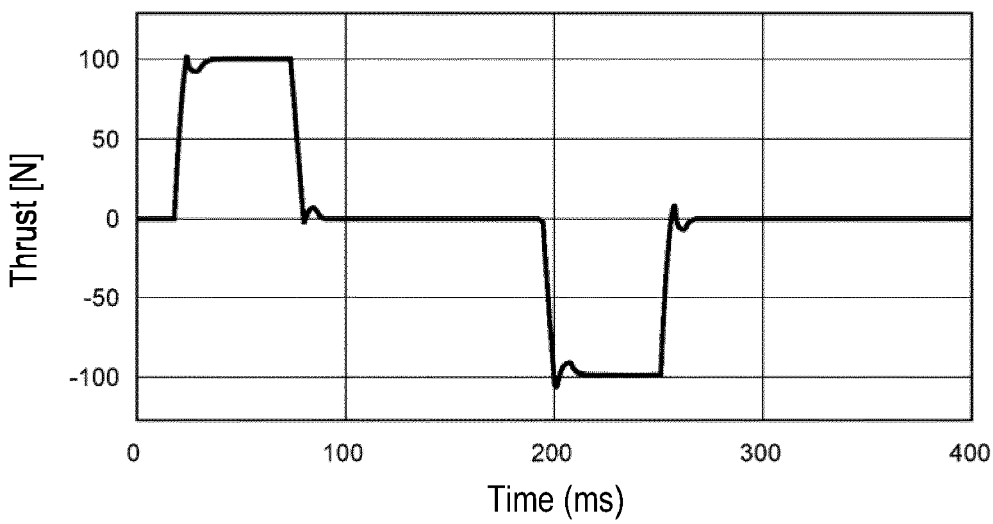

FIG. 13

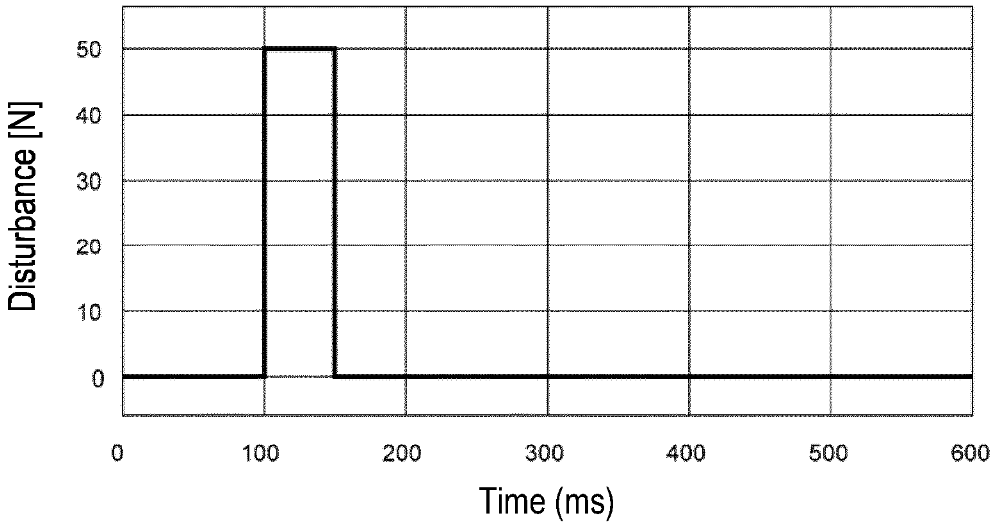


FIG. 14A

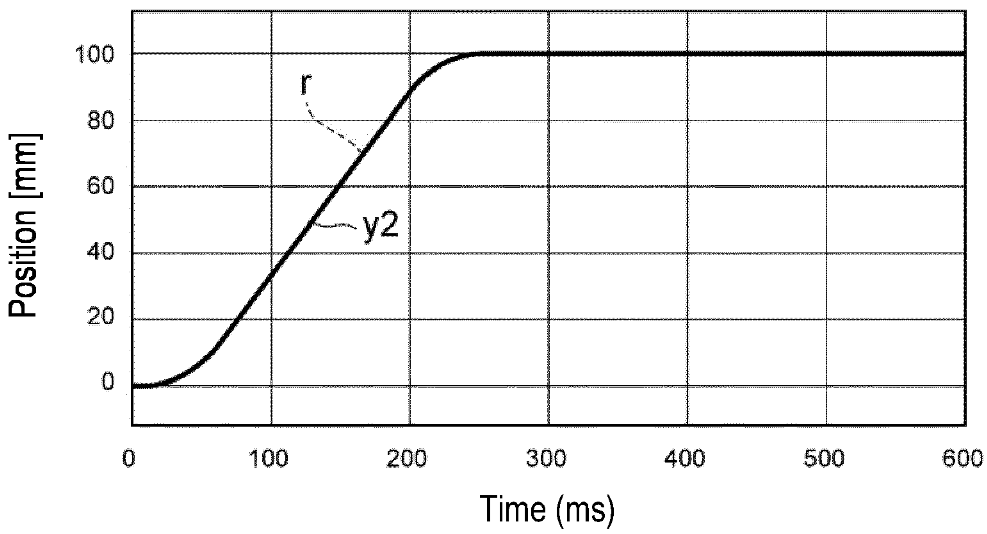

FIG. 14B

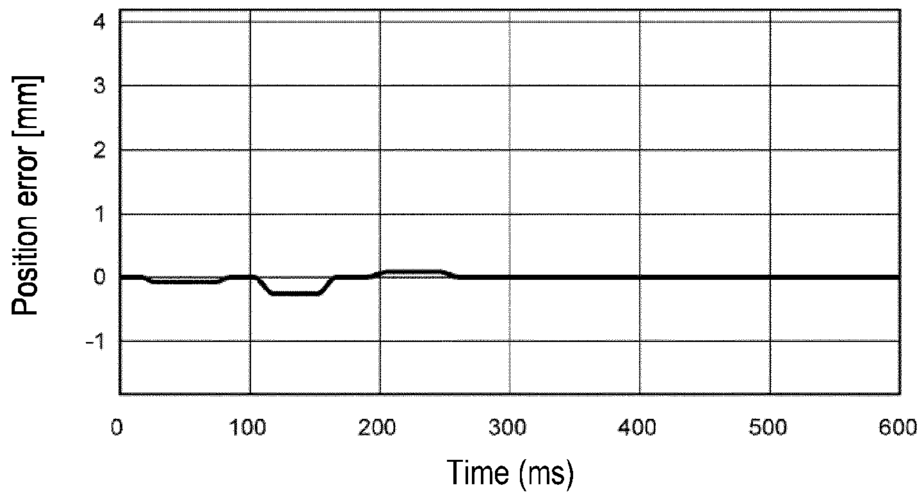


FIG. 14C

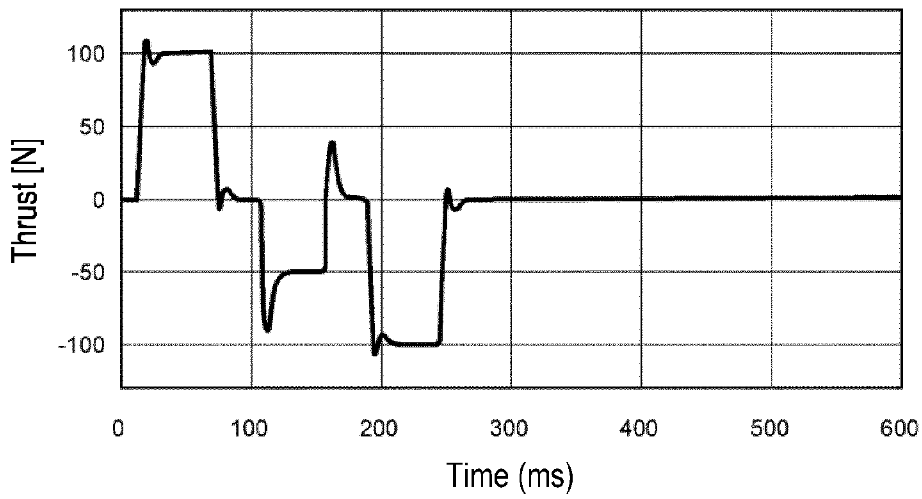


FIG. 15A

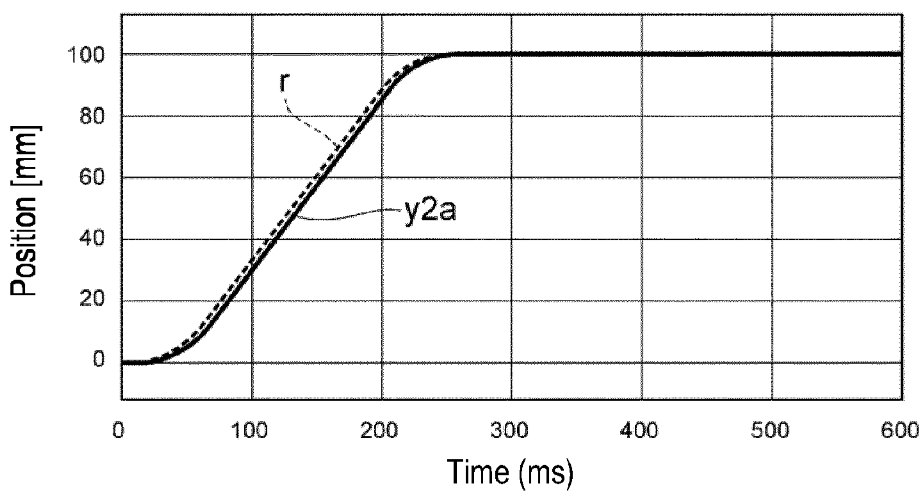

FIG. 15B

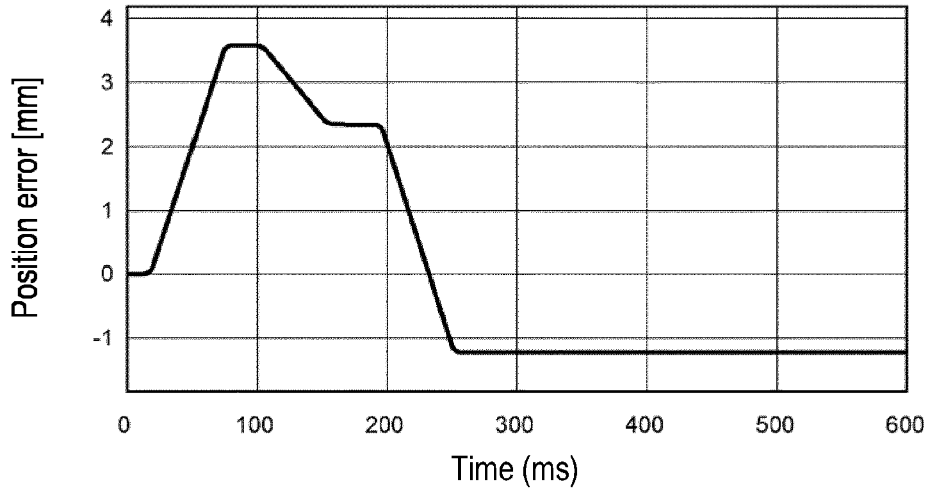


FIG. 15C

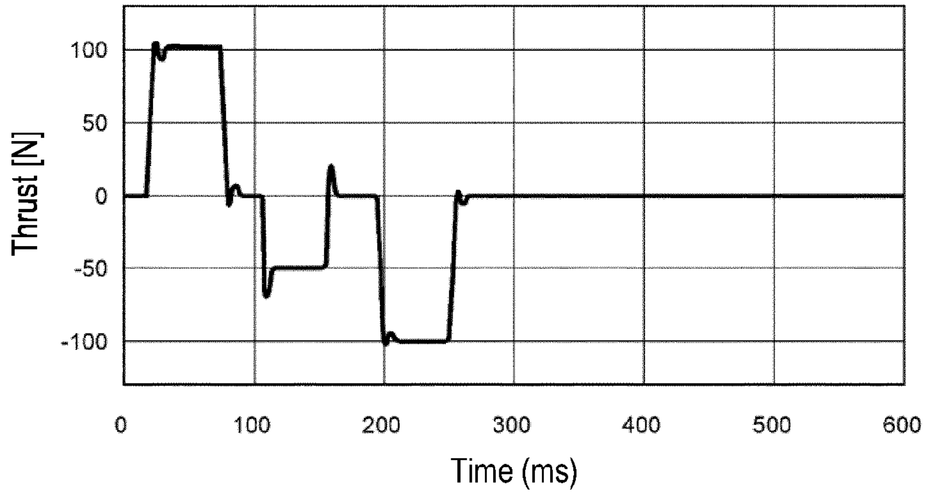


FIG. 16A

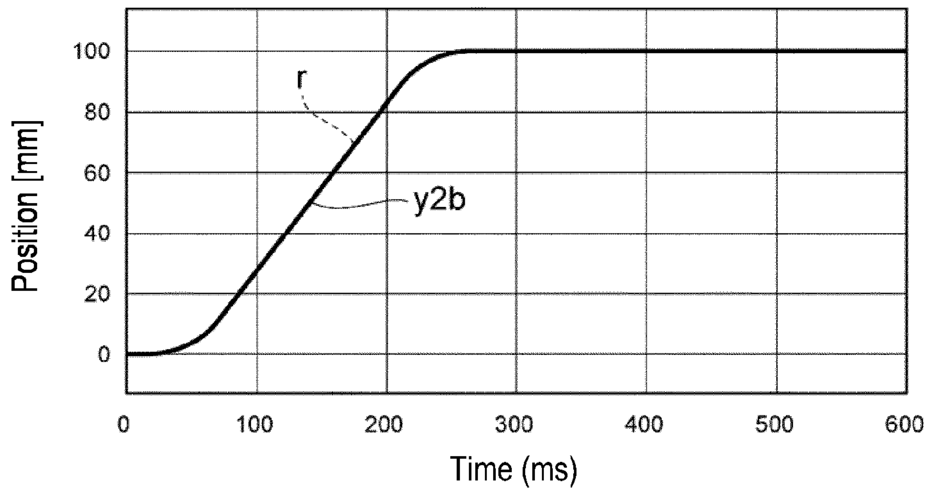

FIG. 16B

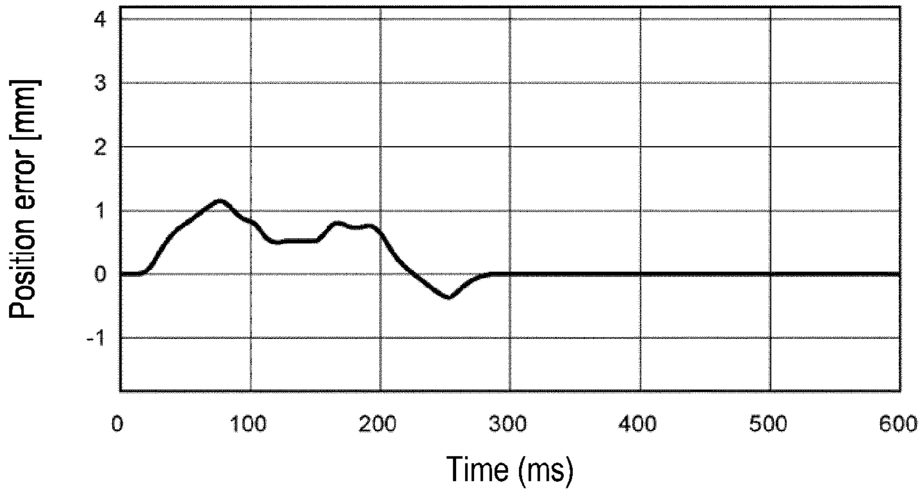


FIG. 16C

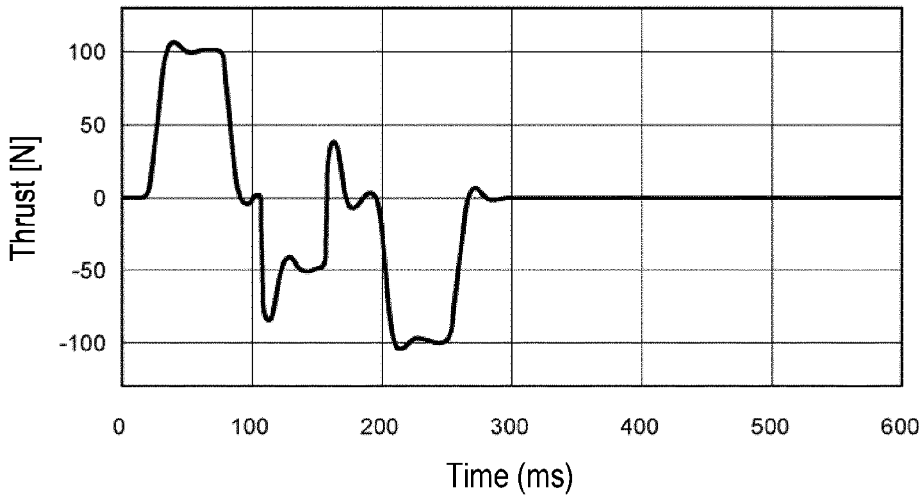


FIG. 17A

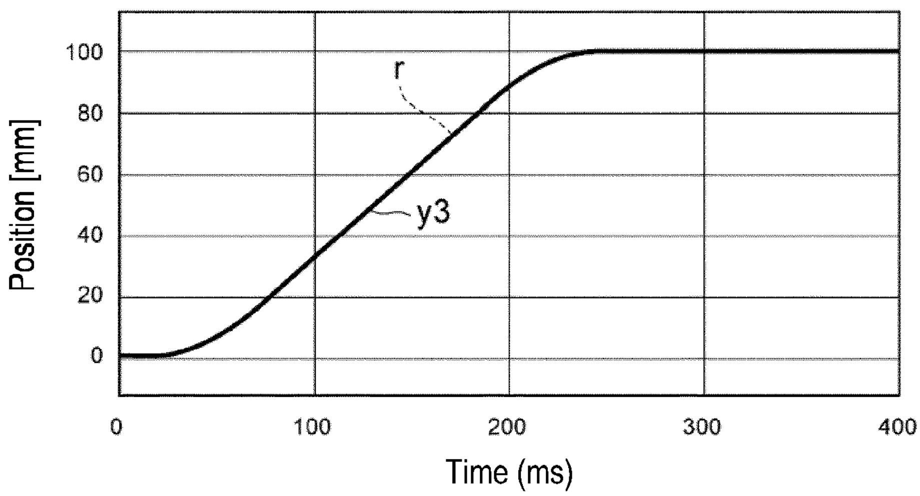

FIG. 17B

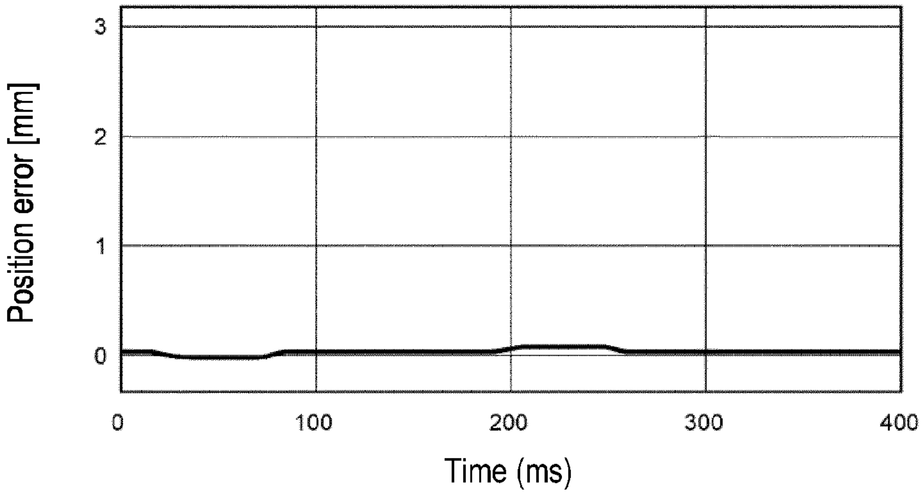


FIG. 17C

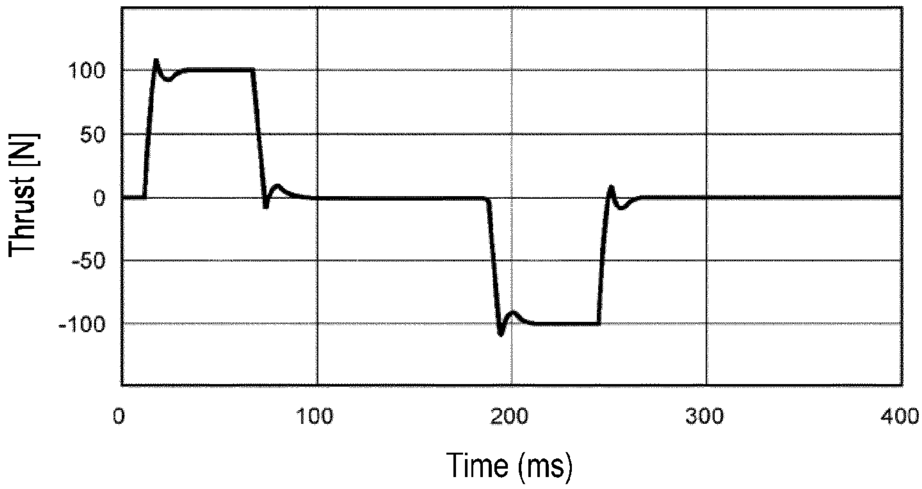


FIG. 18A

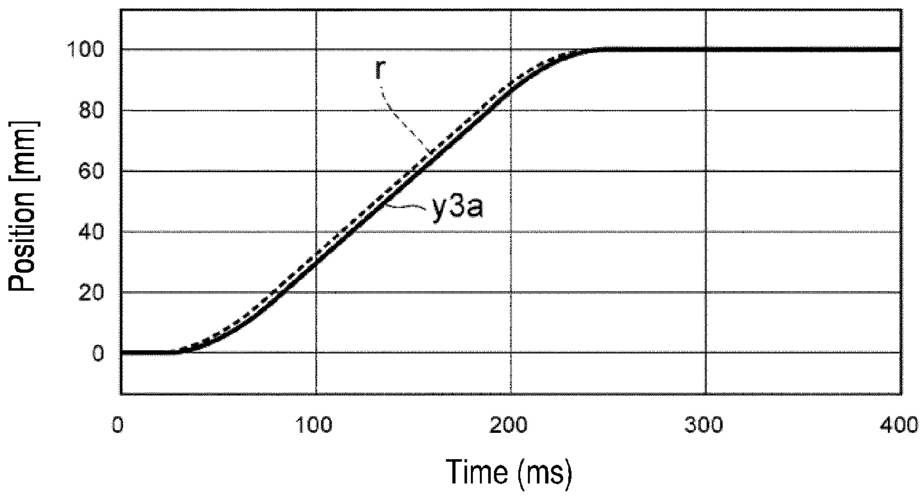

FIG. 18B

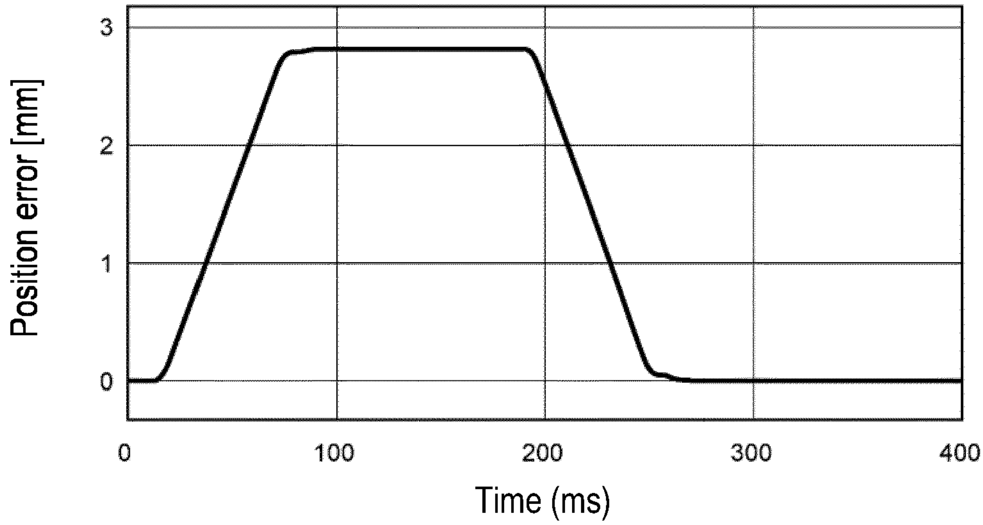


FIG. 18C

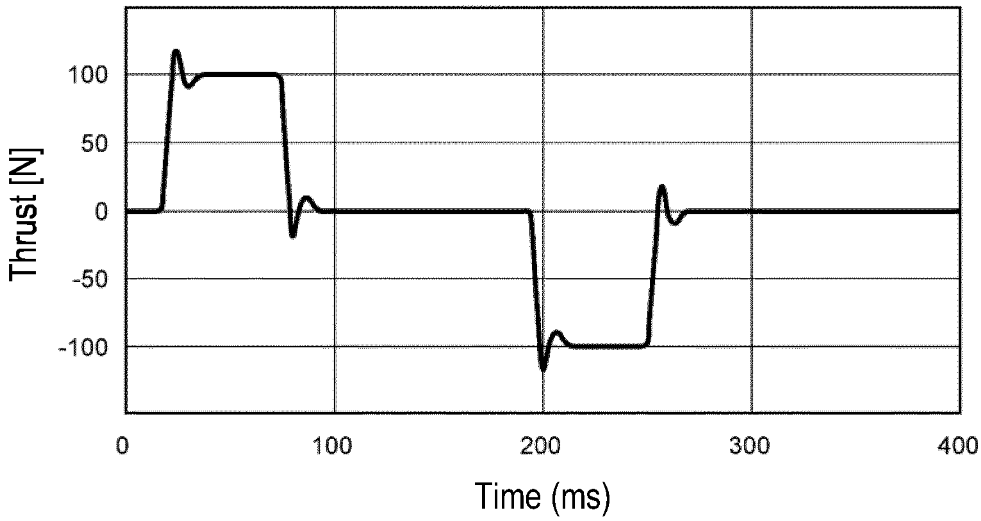

FIG. 19

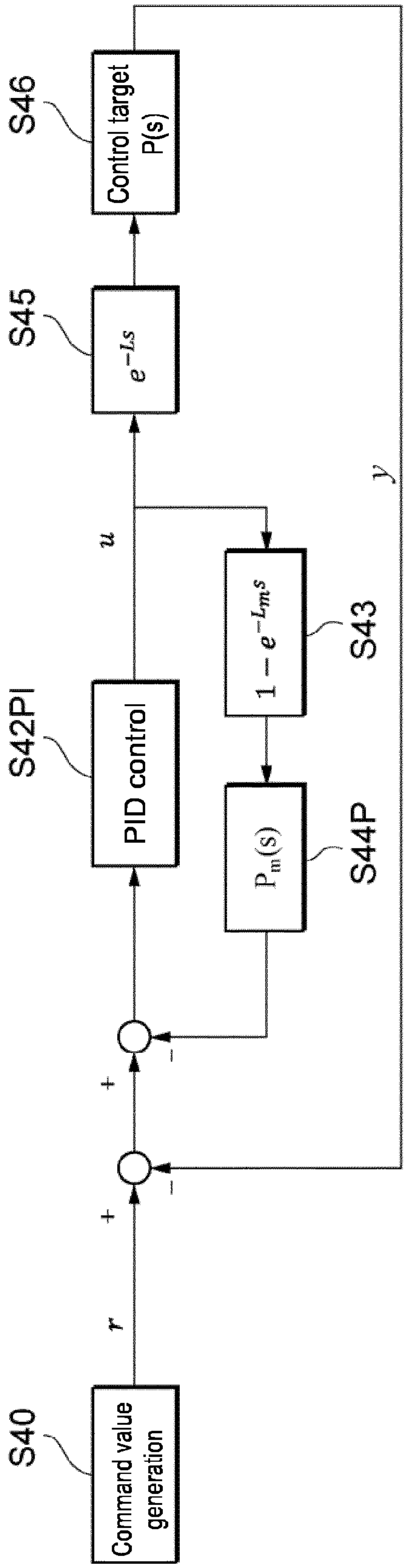
S40
Command value generation
r
+
-
+
-
S42PI
PID control
u
S43
$1 - e^{-L_m s}$
S44P
$P_m(s)$
S45
$e^{-Ls}$
S46
Control target P(s)
y

Europäisches Patentamt
European Patent Office
Office européen des brevets

# EUROPEAN SEARCH REPORT

Application Number
EP 23 16 2572

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2014/128998 A1 (SAYYARRODSARI BIJAN [US] ET AL) 8 May 2014 (2014-05-08) * paragraphs [0001], [0020], [0025]; figures 2,3 * ----- | 1-8 | INV. G05B13/04 |
| Y | ABEI N ET AL: "Smith predictor control and internal model control - a tutorial -", SICE 2003 ANNUAL CONFERENCE FUKUI, JAPAN AUG. 4-6, 2003, PISCATAWAY, NJ, USA,IEEE, vol. 2, 4 August 2003 (2003-08-04), pages 1383-1387, XP010716767, ISBN: 978-0-7803-8352-4 * figures 1,6 * ----- | 1-8 | |

TECHNICAL FIELDS SEARCHED (IPC)

G05B

The present search report has been drawn up for all claims

1

| Place of search | Date of completion of the search | Examiner |
|---|---|---|
| The Hague | 15 August 2023 | Bassi, Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 16 2572

This annex lists the patent family members relating to the patent documents cited in the above-mentioned European search report. The members are as contained in the European Patent Office EDP file on The European Patent Office is in no way liable for these particulars which are merely given for the purpose of information.

15-08-2023

| Patent document cited in search report | Publication date | Patent family member(s) | Publication date |
|---|---|---|---|
| US 2014128998 A1 | 08-05-2014 | CN 103809472 A | 21-05-2014 |
| | | EP 2728425 A1 | 07-05-2014 |
| | | US 2014128998 A1 | 08-05-2014 |
| | | US 2016170393 A1 | 16-06-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022061757 A
- JP 2014081821 A